(19) Europäisches Patentamt
European Patent Office
Office européen des brevets

(11) EP 0 732 492 A2

(12) **EUROPEAN PATENT APPLICATION**

(43) Date of publication:
**18.09.1996 Bulletin 1996/38**

(51) Int. Cl.$^6$: **F02D 41/38**

(21) Application number: **96104050.8**

(22) Date of filing: **14.03.1996**

(84) Designated Contracting States:
**DE FR GB**

(30) Priority: **16.03.1995 JP 57791/95**

(71) Applicants:
- **TOYOTA JIDOSHA KABUSHIKI KAISHA**
  **Aichi-ken (JP)**
- **NIPPONDENSO CO., LTD.**
  **Kariya-city Aichi-pref., 448 (JP)**

(72) Inventors:
- **Itoh, Yoshiyasu**
  **Toyota-shi, Aichi-ken (JP)**
- **Kawai, Taiyo**
  **Toyota-shi, Aichi-ken (JP)**
- **Fujimura, Toshio**
  **Toyota-shi, Aichi-ken (JP)**
- **Kizaki, Mikio**
  **Toyota-shi, Aichi-ken (JP)**
- **Inaba, Takayoshi**
  **Kariya-city, Aichi-pref., 448 (JP)**
- **Yamakita, Hiroshi**
  **Kariya-city, Aichi-pref., 448 (JP)**

(74) Representative: **Pellmann, Hans-Bernd, Dipl.-Ing. et al**
**Patentanwaltsbüro**
**Tiedtke-Bühling-Kinne & Partner**
**Bavariaring 4**
**80336 München (DE)**

# (54) Fuel injection control apparatus for an internal combustion engine

(57) In a fuel injection control apparatus, generation of exhaust smoke is reduced and a revolution speed of a crank shaft (40) of an associated engine (2) is prevented from being decreased by controlling an electromagnetic spill valve according to a pulse signal positively output at any revolution speed of the engine. A fuel injection pump (1) has a spill valve (23) which opens to stop fuel injected to the engine, a revolution detector detecting revolution of the crank shaft (40) to output consecutive pulses corresponding to each tooth of a pulser (7). An amount of fuel to be injected is calculated in accordance with operational states of the engine (2). The spill valve is closed when the engine (2) is operated at an extremely-low speed. A closing time is determined when a first reference pulse is detected. The first reference pulse is generated by a first reference tooth provided in the vicinity of a tooth cut-out part. The spill valve (23) is open when a spill valve opening time period has elapsed since a second reference pulse is generated when it is determined that the internal combustion engine is operated at the extremely low-speed. The second reference pulse is generated by a second reference tooth provided behind the first reference tooth with respect to a rotational direction of the pulser (7). The spill valve opening time period is calculated based on a period of a pulse preceding the second reference pulse and a calculated amount of fuel to be injected.

EP 0 732 492 A2

Printed by Rank Xerox (UK) Business Services
2.13.4/3.4

(Cont. next page)

FIG. 1

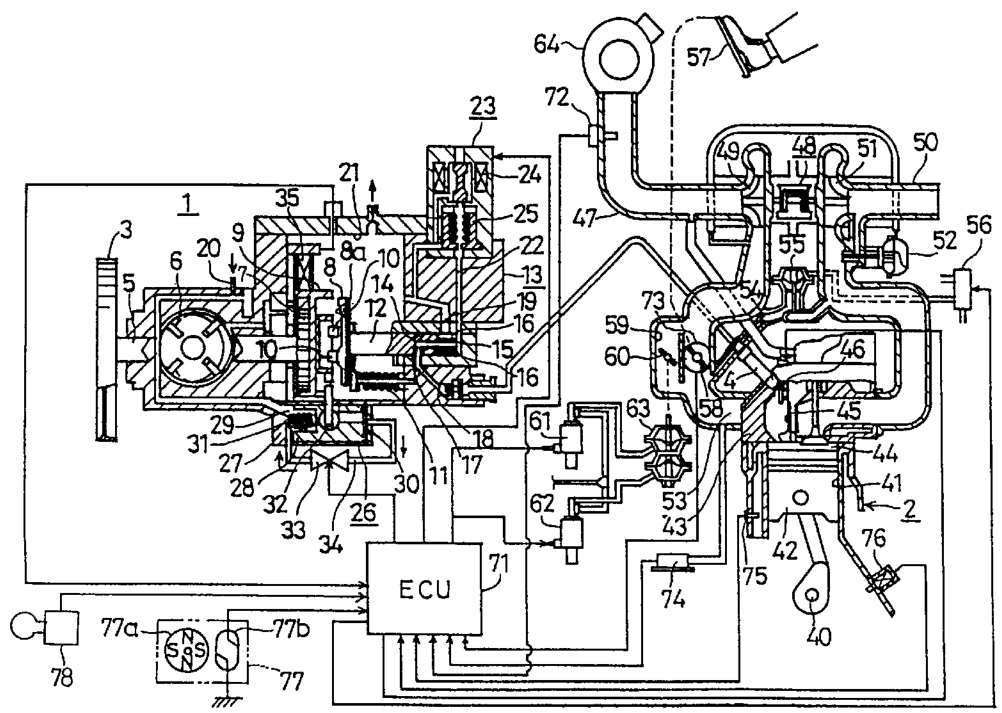

## Description

BACKGROUND OF THE INVENTION

1. Field of the Invention

The present invention relates to a fuel injection control apparatus for an internal combustion engine and, more particularly, to a fuel injection control apparatus performing an on/off operation of an electromagnetic spill valve based on an output signal from a rotation sensor.

2. Description of the Related Art

There is a conventional fuel injection apparatus, as one of many fuel injection apparatuses, having a generator type revolution sensor which may be referred to as an electromagnetic pickup type sensor. The revolution sensor outputs a rotation signal at intervals of a predetermined crank angle occurring as the engine is operated. This type of revolution sensor has a disadvantage in that an electromotive force of a detection coil provided in the sensor is small when the engine is operated at a low speed. This is because this type of revolution sensor operates on a principle that a variation in the magnetic flux in response to the operation can be detected. That is, the sensor generates a revolution signal by detecting a variation in the magnetic flux due to a rotation of the engine. Accordingly, when the engine is started in a low-temperature condition or when the battery voltage has dropped, a level of the revolution signal generated by the revolution sensor is significantly deceased and cannot be detected since the rotation of the engine is very low. Thus, there is a problem in that an appropriate fuel injection cannot be performed based on rotation of the engine, resulting in a start failure.

Japanese Laid-Open Patent Application No.61-258951 suggests a method to solve the above-mentioned problem. In this method, an electromagnetic spill valve is forcibly and continuously turned on, irrespective of the revolution signal, when an associated engine is started so that fuel is positively injected whenever the engine is started. However, this method has a problem in that an excessive amount of fuel may be injected during start since the spill valve is continuously closed so as to provide the maximum injection capability of the fuel injection pump. If the excessive amount of fuel is injected at the start time, exhaust smoke is increased. Additionally, the revolution speed of the crank is decreased since a necessary torque for driving the fuel injection pump is increased. In the worst case, the engine may not be started.

SUMMARY OF THE INVENTION

It is a general object of the present invention to provide an improved and useful fuel injection control apparatus in which the above-mentioned problems are eliminated.

A more specific object of the present invention is to provide a fuel injection control apparatus which can reduce generation of exhaust smoke and prevent a revolution speed of a crank of an associated engine from being decreased by controlling an electromagnetic spill valve according to a pulse signal positively output at any revolution speed of the engine.

In order to achieve the above-mentioned objects, there is provided according to one aspect of the present invention a fuel injection control apparatus for an internal combustion engine, comprising:

a fuel injection pump having a spill valve returning fuel to an inlet side of the fuel injection pump by being open so that the fuel is not injected to the internal combustion engine;

a revolution detector detecting revolutions of a crank shaft of the engine, the revolution detector having a gear-like pulser and an electromagnetic pickup, the pulser rotating in synchronization with revolution of the crank shaft and having at least one tooth cut-out part in which no tooth is provided, the electromagnetic pickup sensing movement of each tooth formed on the pulser so as to generate and output consecutive pulses corresponding to each tooth; and

fuel injection amount calculating means for calculating an amount of fuel to be injected to the internal combustion engine in accordance with operational states of the internal combustion engine,

characterized in that:

extremely low-speed operation state detecting means determines whether or not the internal combustion engine is operated at an extremely low-speed;

spill valve closing means closes the spill valve when the internal combustion engine is operated at the extremely-low speed, a closing time of the spill valve being determined based on detection of a first reference pulse generated by a first reference tooth provided in the vicinity of the tooth cut-out part; and

spill valve opening means opens the spill valve when a spill valve opening time period is elapsed since a second reference pulse is generated when it is determined that the internal combustion engine is operated at the extremely low-speed, the second reference pulse being generated by a second reference tooth provided behind the first reference tooth with respect to a rotational direction of the pulser, the spill valve opening time period being calculated based on a period of a pulse preceding the second reference pulse and an amount of fuel calculated by the fuel injection amount calculating means.

According to the above-mentioned invention, when it is determined that the engine is operated at extremely low-speed, the spill valve is positively closed when the first reference pulse is detected. That is, fuel injection is started when the first reference pulse is detected. Additionally, the spill valve is positively open, that is, the fuel injection is positively stopped based on detection of the second reference pulse. Thus, although a stop timing of the fuel injection is located in the vicinity of top dead end of the engine stroke where there is a possibility of missing a pulse, the spill valve is open at an appropriate time. This greatly reduces generation of exhaust smoke as compared to the full amount injection method used in the prior art.

The pulses generated before the second reference pulse may include a first pulse and a second pulse, and the spill valve opening time period may be calculated in accordance with periods of the first pulse and the second pulse. The first pulse is adjacent to the first reference pulse, and the second pulse is adjacent to the second reference pulse. Accordingly, fluctuation in the speed of revolution in a current cycle is reflected to the opening time of the spill valve, resulting in accurate control of the opening time of the spill valve.

Additionally, the spill valve opening means may calculate a target spill valve opening time period based on the amount of fuel calculated by the fuel injection amount calculating means. The target spill valve opening time period is divided into a pulse period corresponding to a multiple of a period of a single pulse and a remainder period which is less than the period corresponding to a single pulse. The spill valve is open at a time when the remainder period has elapsed since the number of pulses included in the target spill valve opening time period is counted when it is determined by the extremely low-speed operation state detecting means that the internal combustion engine is not operated in the extremely low-speed operation state.

In the above-discussed invention, the second reference tooth is provided in a position where the second reference pulse is positively detected irrespective of fluctuation in engine speed during one cycle. The position of the second reference tooth may be experimentally determined.

Additionally, there is provided according to another aspect of the present invention a fuel injection control apparatus for an internal combustion engine, comprising:

a fuel injection pump having a spill valve returning fuel to an inlet side of the fuel injection pump by being open so that the fuel is not injected to the internal combustion engine;
a revolution detector detecting revolutions of a crank shaft of the engine, the revolution detector having a gear-like pulser and an electromagnetic pickup, the pulser rotating in synchronization with the revolution of the crank shaft and having at least one tooth cut-out part, the electromagnetic pickup sensing movement of each tooth formed on the pulser so as to generate and output consecutive pulses corresponding to each tooth; and
fuel injection amount calculating means for calculating an amount of fuel to be injected to the internal combustion engine in accordance with operational states of the internal combustion engine,
characterized in that:
extremely low-speed operation state detecting means determines whether or not the internal combustion engine is operated at an extremely low-speed;
spill valve closing means closes the spill valve when the internal combustion engine is operated at the extremely-low speed, a closing time of the spill valve being determined based on a detection of a first reference pulse generated by a first reference tooth provided in the vicinity of the tooth cut-out part;
reference pulse period storing means calculates and stores a reference pulse period corresponding to each of the pulses between a second reference pulse generated by a second reference tooth and a third reference pulse generated by a third reference tooth, the second reference tooth and the third reference tooth being provided behind the first reference tooth with respect to a rotational direction of the pulser, the lowest crank shaft speed occurring between a time when the second pulse is generated and a time when the third reference pulse is generated; and
spill valve opening means opens the spill valve when a spill valve opening time period has elapsed since the second reference pulse is generated when it is determined that the internal combustion engine is operated at the extremely low-speed, the spill valve opening time period being calculated based on the reference pulse period stored in a previous cycle and an amount of fuel calculated by the fuel injection amount calculating means.

According to this invention, since the lowest rotational speed of the crank shaft occurs between a time when the second pulse is generated and a time when the third reference pulse is generated, if there is a missing pulse, the missing pulse occurs between the second reference pulse and the third reference pulse. In the present invention, the pulse period between the second reference pulse and the third reference pulse of the previous cycle is referred to so as to determine the opening time of the spill valve. Thus, missing a pulse in the current cycle can be predicted, and the opening time of the spill valve can be corrected to eliminate an influence of the missing pulse. This method eliminates influences due to variation in manufacturing tolerances, environmental conditions and battery condition, which cannot be done in the conventional apparatus in which the opening time of the spill valve is corrected by referring to the counted number of pulses.

A fourth reference tooth and a fifth reference tooth may be provided between the first reference tooth and the second reference tooth. A time period between a fourth reference pulse generated by the fourth reference tooth and a fifth reference pulse generated by the fifth reference tooth is calculated. The spill valve opening time period may be corrected in accordance with a relationship between the time period obtained in the previous cycle and the time period obtained in the current cycle.

Additionally, in the present invention, the spill valve opening means may calculate a target spill valve opening time period based on the amount of fuel calculated by the fuel injection amount calculating means, the target spill valve opening time period being divided into a pulse period corresponding to a multiple of a period of a single pulse and a remainder period less than the period corresponding to a single pulse, an opening time of the spill valve is changed when the number of pulses included in said target spill valve opening time period has been counted before the spill valve opening time period has elapsed so that the spill valve is open at a time when the remainder period has elapsed since the number of pulses has been counted; and the spill valve opening means calculates a remaining time period of the spill valve opening time period for said extremely low-speed operational state at a time when said number of pulses is counted, the change of the opening time of the spill valve being prohibited when the remaining time period is less than a pulse period in the previous cycle which pulse period corresponds to the last pulse period included in the target spill valve opening time period in the current cycle.

The opening time of the spill valve slightly fluctuates due to fluctuation in the rotational speed of the engine. If the opening time of the spill valve is slightly later than the rising time of one of the pulses, and if there is a missing pulse, there may be a possibility that the number of pulses included in the target spill valve opening time period is counted immediately before the spill valve opening time period is elapsed. In this case, the opening time of the spill valve is controlled according to the remainder period. That is, the remainder period is added at a time one pulse period later than the appropriate time obtained when no pulse is missing. Thus, an appropriate fuel injection is not performed since an excessive amount of fuel is injected. In order to eliminate such a problem, if the remaining time when the number of pulses has been counted is less than the pulse period in the previous cycle, it is determined that there is a missing pulse. Then, an execution of the normal control process is prohibited so that the spill valve is open under a control performed in the extremely low-speed operation state. As a result, injection of an excessive amount of fuel is positively prevented.

Additionally, the second reference tooth and the third reference tooth may be provided in positions where the second reference pulse and the third reference pulse are positively detected irrespective of fluctuations in engine speed during one cycle. The positions of the second reference tooth and the third reference tooth may be determined by experiments.

Additionally, a full amount injection may be performed when the second reference pulse is not detected. The extremely low-speed operation state detecting means may determine occurrence of the extremely low-speed operation state based on a period of a plurality of consecutive pulses generated when a rotational speed of the crank shaft is relatively high in each cycle.

Other objects, features and advantages of the present invention will become more apparent from the following detailed description when read in conjunction with the accompanying drawings.

## BRIEF DESCRIPTION OF THE DRAWINGS

FIG.1 is an illustration showing a structure of a fuel injection control apparatus according to the embodiment of the present invention, the fuel injection control apparatus cooperating with a diesel engine having a supercharger;

FIG.2 is an enlarged cross-sectional view of a distributor type fuel injection pump shown in FIG.1;

FIG.3 is a block diagram of an engine control unit shown in FIG.1;

FIGS.4 and 5 are flowcharts of a first embodiment of a fuel injection control process performed by the ECU 71.

FIG.6 is a graph corresponding to a map used in the fuel injection control process;

FIGS.7 and 8 are timing charts for explaining an operation of the fuel injection control process according to the first embodiment;

FIGS.9 and 10 are parts of a flowchart of the second embodiment of the fuel injection control process according to the present invention;

FIG.11 is a main routine of the second embodiment of the fuel injection control process according to the present invention;

FIGS.12 and 13 are timing charts for explaining an operation of the fuel injection control process according to the second embodiment;

FIG.14 is a timing chart for explaining a calculation of a reference pulse interval according to the second embodiment when there is no missing pulse;

FIG.15 is a timing chart for explaining a calculation of a reference pulse interval according to the second embodiment when there is one missing pulse;

FIG.16 is a timing chart for explaining a calculation of a reference pulse interval according to the second embodiment when there are two missing pulses;

FIG.17 is a timing chart for explaining a calculation of a reference pulse interval according to the second embodiment when there is three missing pulses; and

FIG.18 is a timing chart for explaining a setting method of an opening time of an electromagnetic spill valve.

## DETAILED DESCRIPTION OF THE PREFERRED EMBODIMENTS

A description will now be given of a first embodiment according to the present invention. FIG.1 is an illustration showing a structure of a fuel injection control apparatus according to the first embodiment of the present invention, the fuel injection control apparatus cooperating with a diesel engine having a supercharger. FIG.2 is an enlarged cross-sectional view of a distributor type fuel injection pump 1 shown in FIG.1.

The fuel injection pump 1 has a drive pulley 3 coupled with the crank shaft 40 of the diesel engine 2 via a pulley belt (not shown in the figures). The fuel injection pump 1 is driven when the drive pulley 3 is rotated. Fuel is delivered to a fuel injection nozzle 4 provided for each cylinder of the diesel engine 2, and the fuel is injected into each engine cylinder. In this case, the diesel engine 2 has four engine cylinders.

The drive pulley 3 of the fuel injection pump 1 is mounted on an end of a drive shaft 5. A fuel feed pump 6 is provided in the middle of the drive shaft 5. It should be noted that the fuel feed pump 6 is shown in a 90 degrees turned view in FIGS.1 and 2 for easy understanding. Additionally, a disk-like pulser 7 is mounted on an inner end of the drive shaft 5. The pulser 7 has a plurality of protrusions or teeth on an outer circumference thereof, the protrusions or teeth being arranged at equal angle intervals. Hereinafter, the protrusions or teeth are simply referred to as teeth. In the present case, four tooth cut-out parts are formed at equal angle intervals. The tooth cut part-out is a portion of the outer periphery of the pulser 7 in which a tooth or teeth are not formed. The number of tooth cut-out parts corresponds to the number of engine cylinders. The inner end of the drive shaft 5 is connected to a cam plate 8 via a coupling (not shown in the figures).

A roller ring 9 is provided between the pulser 7 and the cam plate 8. A plurality of cam rollers 10 are mounted on a roller ring 9 along a circumference so that the cam rollers 10 face cam faces 8a formed on the cam plate 8. The number of cam faces 8a is equal to the number of the engine cylinders of the diesel engine 2. The cam plate 8 is pressed against the cam rollers 10 by a spring 11.

The cam plate 8 is fixed to an end of a plunger 12 which pressurizes fuel introduced into a cylinder 14. The cam plate 8 and the plunger 12 are jointly rotated by rotation of the drive shaft 5. That is, a rotational force of the drive shaft 5 is transmitted to the cam plate 8 via a coupling. The cam plate 8 engages with the cam rollers 10 while it is rotated. Thus, the cam plate 8 reciprocates in an axial direction of the drive shaft 5 while it is rotated by the drive shaft 5. Accordingly, the plunger 12 assembled with the cam plate 8 reciprocates in the cylinder 14 while it is rotated. More specifically, when the cam faces 8a of the cam plate 8 ride on the cam rollers 10 of the cam roller 9, the plunger 12 is moved forward, and when the cam faces 8a ride off from the cam rollers 10, the plunger 12 is moved backward.

The plunger 12 is inserted into the cylinder 14 formed in a pump housing 13. A high-pressure chamber 15 is formed between an end surface of the plunger 12 and a bottom surface of the cylinder 14. An outer surface of the plunger 12 near the end thereof is provided with a plurality of grooves 16 and a distribution port 17. A plurality of distribution passages 18 and an inlet port 19 are provided in the pump housing 13 to form a fuel passage from the inlet side to the outlet side.

When the fuel feed pump 6 is driven by rotation of the drive shaft 5, fuel is supplied to a fuel chamber 21 from a fuel tank (not shown in the figures) via a fuel supply port 20. The fuel in the fuel chamber 21 is introduced into the high-pressure chamber 15 when the plunger 12 is moved backward and one of the grooves 16 connects to the inlet port 19. The fuel introduced into the high-pressure chamber 15 is pressurized by the forward movement of the plunger 12, and the pressurized fuel is delivered to the fuel injection nozzle 4 via one of the distributor passages 18.

The pump housing 13 is provided with a spill passage 22 for spilling the fuel by allowing the high-pressure chamber 15 to communicate with the fuel chamber 21. An electromagnetic spill valve 23 which serves as a valve for adjusting the spill of the fuel from the high-pressure chamber 15 is provided in the spill passage 22. The electromagnetic spill valve 23 is a normally opened valve. When a coil 24 is not energized (i.e. in an OFF state), a valve body 25 is open so that the fuel in the high-pressure chamber 15 is spilled to the fuel chamber 21. When the coil 24 is energized (i.e. in an ON state), the valve body 25 is closed so that the fuel is prevented from spilling from the high-pressure chamber 15 to the fuel chamber 21.

The electromagnetic spill valve 23 is opened or closed in response to the timing control at which the coil 24 of the electromagnetic spill valve 23 is energized. In this way, the amount of fuel spilled from the high-pressure chamber 15 to the fuel chamber 21 is adjusted. By opening the electromagnetic spill valve 23 during a compression stroke (forward movement) of the plunger 12, the pressure of the fuel in the high-pressure chamber 15 is reduced, and the fuel injection from the fuel injection nozzle 4 is halted. That is, the fuel pressure in the high-pressure chamber 15 cannot be increased by moving the plunger 12 forward as long as the electromagnetic spill valve 23 is open. Hence, the fuel injection from the fuel injection nozzle 4 does not take place. The amount of the fuel injected from the fuel injection nozzle 4 is controlled by controlling the timing at which the electromagnetic spill valve 23 is opened or closed during the forward movement of the plunger 12.

A timer unit 26 (shown in a 90° turned view in FIGS. 1 and 2) for adjusting the timing of the fuel injection is provided below the pump housing 13. The timer unit 26 modifies the position of the roller ring 9 in the rotational direction of the drive shaft 5 so as to modify the timing at which the cam faces 8a are engaged with the cam rollers 10, that is, the timing of the reciprocating motion of the cam plate 8 and the plunger 12.

The timer unit 26 is hydraulically driven and comprises a timer housing 27, a timer piston 28 fitted in the housing 27, and a timer spring 31 which, provided in a low-pressure chamber 29 of the timer housing 27, urges the timer piston 28 toward a pressurized chamber 30. The timer piston 28 is connected to the roller ring 9 via a slide pin 32.

The fuel, which is pressurized by the fuel feed pump 6, is introduced into the pressurized chamber 30 of the timer housing 27. The position of the timer piston 28 is determined according to a balancing relationship between the fuel pressure and the urging force of the timer spring 31. As the position of the timer spring 28 is determined, the position of the roller ring 9 is determined, and thus the timing of the reciprocal motion of the cam plate 8 and the plunger 12 is determined.

A timing control valve 33 for adjusting the fuel pressure (that is, a control oil pressure) of the timer unit 26 is provided in the timer unit 26. The pressurized chamber 30 and the low-pressure chamber 29 of the timer housing 27 are allowed to communicate with each other via a communicating passage 34. The timing control valve 33 is provided in the communicating passage 34. The timing control valve 33 is an electromagnetic valve which is opened or closed in accordance with an energizing signal subject to duty control. Opening and closing of the timing control valve 33 adjusts the fuel pressure in the pressurized chamber 30. By adjusting the fuel pressure, the timing of the fuel injection from the fuel injection nozzle 4 as well as the lift timing of the plunger 12 is controlled.

A revolution sensor 35 comprising an electromagnetic pickup is provided above the roller ring 9 so as to face the periphery of the pulser 7. The revolution sensor 35 detects a variation in the magnetic flux as the teeth in the pulser 7 traverse a space below the revolution sensor 35. The revolution sensor 35 outputs a timing signal, that is, engine revolution pulses, corresponding to an engine speed NE. In other words, the revolution sensor 35 outputs a revolution-angle signal for each predetermined crank angle. Since the revolution sensor 35 is integral with the roller ring 9, the revolution sensor 35 outputs a reference timing signal at regular intervals with respect to the lift of the plunger 12, irrespective of the control operation of the timer unit 26. As has been described previously, since the revolution sensor 35 uses an electromagnetic pickup, the electromotive force generated in the pickup in the sensor becomes small during a low speed period, with the result that the engine revolution pulses cannot be output.

A description will now be given of the diesel engine 2. A main combustion chamber 44 corresponding to each of the engine cylinders of the diesel engine 2 comprises a cylinder 41, a piston 42 and a cylinder head 43. The main combustion chamber 44 is connected to a subsidiary combustion chamber 45 corresponding to each of the engine cylinders. The fuel injected from the respective fuel injection nozzle 4 is supplied to the subsidiary combustion chamber 45. The subsidiary combustion chamber 45 is provided with a known glow plug 46 as a start assisting device.

The diesel engine 2 is provided with an intake pipe 47 and an exhaust pipe 50. The intake pipe 47 is provided with a compressor 49 of a turbocharger 48 constituting a supercharger. The exhaust pipe 50 is provided with a turbine 51 of the turbocharger 48. The exhaust pipe 50 is also provided with a waste gate valve 52 for adjusting the supercharge pressure PIM.

As is know, the turbocharger 48 is configured such that the energy of the exhaust gas is utilized to rotate the turbine 51 and the compressor 49 coupled to the same shaft as the turbine 51 so as to increase the pressure of the intake air. Thus, a fuel-air mixture having a high density is fed to the main combustion chamber 44 so that a large amount of fuel is combusted and the output of the diesel engine 2 is increased.

The diesel engine 2 is provided with a recirculation pipe 54 for returning a portion of the exhaust gas in the exhaust pipe 50 to an intake port 53 of the intake pipe 47. An exhaust gas recirculation valve (EGR valve) 55 for adjusting the amount of recirculated exhaust gas is provided in the recirculation pipe 54. The EGR valve 55 is controlled by a vacuum switching valve (VSV) 58 so as to be opened or closed.

A throttle valve 58 which is opened and closed in cooperation with actuation of an accelerator pedal 57 is provided in the intake pipe 47. A bypass passage 59 is provided to be parallel with the throttle valve 58, and a bypass throttle valve 60 is provided in the bypass passage 59.

The bypass throttle valve 60 is controlled so as to be opened or closed by an actuator 63 having divided diaphragm chambers driven under the control of two VSVs 61 and 62. The bypass throttle valve 60 is opened or closed responsive to the running state of the diesel engine 2. For example, when the diesel engine 2 is in an idle running state, the bypass throttle valve 60 is half open in order to reduce undesired noise and oscillation. When the diesel engine 2 is in a normal running state, the bypass throttle valve 60 is fully open. When the operation of the diesel engine 2 is stopped, the bypass throttle valve 60 is closed so as to achieve a smooth stop of the diesel engine 2.

The fuel injection pump 1, the electromagnetic spill valve 23 provided in the diesel engine 2, the timing control valve 33, the glow plug 46 and the VSVs 56, 61 and 62 are electrically connected to an electronic control unit (hereinafter, referred to as ECU) 71. The ECU 71 controls the timing at which these components are driven.

In addition to the revolution sensor 35, various sensors such as the followings are provided so as to detect the running state of the diesel engine 2. An intake air temperature sensor 72 for detecting an inlet air temperature THA in the vicinity of an air cleaner 64 is provided in the intake pipe 47. An accelerator opening sensor 73 for detecting an accelerator opening degree ACCP corresponding to a load of the diesel engine 2 is provided at the throttle valve 58. In the vicinity of the intake port 53, an intake pressure sensor 74 for detecting the supercharge pressure PIM is provided, the supercharge pressure PIM being a pressure of the intake air supercharged by the turbocharger 48.

Further, a water temperature sensor 75 for detecting the temperature THW of a cooling water of the diesel engine 2, and an ignition switch 78 which is operated when the diesel engine is started or stopped are provided. A crank angle sensor 76 for detecting a rotational reference position of a crank shaft 40 of the diesel engine 2 is provided. For example, the crank angle sensor 78 detects the rotational position of the crank shaft 40 with respect to a top dead center of a specific engine cylinder. Further, there is provided a vehicle speed sensor 77 for detecting a vehicle speed SP by turning a lead switch 77b ON or OFF using a magnet 77a rotated by a gear of a transmission mechanism.

The sensors 72 - 77 are electrically connected to the ECU 71. The revolution sensor 35 is also electrically connected to the EGU 71. The EGU 71 controls the electromagnetic spill valve 23, the timing control valve 33, the glow plug 46 and the VSVs 56, 61 and 62 in accordance with a signal output from the sensors 35, 72 - 77.

A description will now be given, with reference to the block diagram of Fig. 3, of a construction of the ECU 71. The ECU 71, as a logic circuit, comprises a central processing unit (CPU) 81; a read only memory (ROM) 82 which stores a predetermined control program or a map; a random access memory (RAM) 83 which temporarily stores operation results of the CPU; a backup RAM 84 which stores predetermined data; a clock 92 which generates a predetermined clock signal; and a bus 87 which connects the CPU 81, the ROM 82, the RAM 83, the RAM 84 and the clock 92 to an input port 85 and an output port 86.

The intake air temperature sensor 72, the accelerator opening sensor 73, the intake pressure sensor 74 and the water temperature sensor 75 are connected to the input port 85 via respective buffers 88, 89, 90, 91, a multiplexer 93 and an A/D converter 94. Likewise, the revolution sensor 35, the crank angle sensor 76 and the vehicle speed sensor 77 are connected to the input port 85 via a waveform shaping circuit 95. The ignition switch 78 is also connected to the input port 85.

The CPU 81 reads detection signals from the sensors 35, 72 - 77 via the input port 85. The electromagnetic spill valve 23, the timing control valve 33, the glow plug 46 and the VSVs 56, 61 and 62 are connected to the output port 86 via drive circuits 96, 97, 98, 99, 100 and 101, respectively.

The CPU 81 controls the electromagnetic spill valve 23, the timing control valve 33, the glow plug 46 and the VSVs 56, 61 and 62 in accordance with input values read from the sensors 35, 72 - 77.

A description will now be given, with reference to FIGS.4 to 8, of a first embodiment of a fuel injection control process performed by the above-mentioned ECU 71. The flowcharts of FIGS.4 and 5 show the first embodiment of a fuel injection control process performed by the ECU 71. FIG.6 is a graph corresponding to a map used in the fuel injection control process. FIGS.7 and 8 are timing charts for explaining an operation of the fuel injection control process.

The fuel injection control process shown in FIG.4 is started each time the engine speed NE is output. This process is hereinafter referred to as an NE interruption process.

When the NE interruption process is started, the ECU 71 calculates, in step 100, a pulse interval of the engine revolution pulses output from the revolution sensor 35. In this specification, the pulse interval of a pulse refers to a period from the time when the previous pulse rises to the time when the current pulse rises. That is, for example, the pulse interval of a third pulse corresponds to a period between the rising edge of second pulse and the rising edge of the third pulse. Additionally, the ECU 71 increments a count number of engine revolution pulses. Hereinafter, the count number is referred to as an NE interruption counter CNIRQ. The NE interruption counter CNIRQ is cleared when one of the tooth cut-out parts is detected.

In step 102, it is determined whether or not the NE interruption counter CNIRQ is equal to 3. If it is determined that CNIRQ is equal to 3, the routine proceeds to step 104 to open the electromagnetic spill valve 23. That is, in the present embodiment, the tooth of the pulser 7 corresponding to CNIRQ=3 is used as a first reference tooth. In step 104, the electromagnetic spill valve 23 is turned on (closed) as the first reference tooth corresponding to the engine revolution pulse which sets CNIRQ to be equal to 3 is detected. Thus, the fuel injection operation is started.

The first reference tooth is positioned adjacent to the tooth cut-out part. Generally, the closing time of the electromagnetic spill valve 23 is determined by the position of a tooth adjacent to the tooth cut-out part. Accordingly, in the present embodiment, the electromagnetic spill valve 23 is turned on when CNIRQ becomes equal to 3. The tooth cut-out part is formed at an angular position of the crank in which a crank revolution speed is relatively higher than other angular positions. Thus, a first reference pulse corresponding to the first reference tooth can be positively output and detected when the engine revolution speed fluctuates.

On the other hand, if it is determined, in step 102, that CNIRQ is not equal to 3, the routine proceeds to step 106 without executing step 104. In step 106, it is determined whether or not a start signal STA is input from the ignition switch 78. If it is determined that the start signal STA is input, the routine proceeds to step 108. In step 108, it is determined whether or not the engine revolution speed NE is equal to or less than 150 rpm. If the determinations in steps 106 and 108 are both affirmative, and thus it is determined that the engine is being operated at an extremely low speed, the routine proceeds to step 110.

In step 110, it is determined whether or not the NE interruption counter CNIRQ of step 100 is equal to 1. If it is determined that CNIRQ=1, the routine proceeds to step 112 to store the NE pulse interval TNINT calculated in step 100 to the RAM 83 as TN1. If it is determined that CNIRQ is not equal to 1, the routine proceeds to step 114 without executing step 112.

In step 114, it is determined whether or not the NE interruption counter CNIRQ of step 100 is equal to 9. If it is determined that CNIRQ=1, the routine proceeds to step 116 to store the NE pulse interval TNINT calculated in step 100 to the RAM 83 as TN9. If it is determined that CNIRQ is not equal to 9, the routine proceeds to step 118 without executing step 116.

In step 118, it is determined whether or not the NE interruption counter CNIRQ is equal to 10. The tooth of the pulser 7 corresponding to the pulse which renders CNIRQ equal to 10 is a second reference tooth. The second reference tooth is positioned downstream of the first reference tooth with respect to a rotational direction of the pulser 7. Additionally, the second reference tooth is positioned at a crank angle at which the second reference tooth is positively detected irrespective of a fluctuation in the speed of one revolution. It should be noted that the position of the second reference tooth can be easily experimentally determined.

If it is determined, in step 118, that the NE interruption counter CNIRQ is equal to 10, the routine proceeds to step 120. In step 120, the NE pulse interval TNINT of a second reference pulse generated by the second reference tooth is calculated. Additionally, TN9 stored in step 116 is read from the RAM 83. It is then determined whether or not a value of TNINT corresponding to the second reference is equal to or less than a product of TN9 and a predetermined constant, for example, 2.5. The process of step 120 is to determine whether or not the second reference pulse, which renders CNIRQ to be equal to 10, is a normal pulse. As previously discussed, the second reference tooth is formed at a position in which it is detected irrespective of a fluctuation in revolution speed in one cycle. However, if the revolution speed extremely slows down, there may be a possibility that the second reference tooth cannot be detected. This condition may occur when, for example, battery power is extremely depleted.

As discussed later, the second reference pulse generated by the second reference tooth is referred to when the determination of the opening of the electromagnetic spill valve 23 is made. Accordingly, if the second reference tooth cannot be detected, a fuel injection control cannot be appropriately performed, resulting in deterioration of a smooth start operation. In order to eliminate such a problem, the present embodiment is provided with step 120 so as to determine whether or not the second reference pulse, which renders CNIRQ to be equal to 10, is a normal pulse.

The reason for using the pulse interval TN9 between the tooth corresponding to CNIRQ=9 and the tooth corresponding to CNIRQ=8 is that the pulse interval TN9 is close to the second reference pulse and thus there is little influence due to fluctuation in revolution speed. Additionally, the reason for multiplying the constant 2.5 is to provide space to the pulse interval TN9 to deal with a large fluctuation in revolution speed.

If it is determined, in step 120, that the second reference pulse is a normal pulse which is truly generated by the second reference tooth, the routine proceeds to step 122. In step 122, a sum of a value of a spill valve open period and a current time value is calculated. Hereinafter the value of the spill valve open period is referred to as a spill valve OFF period TSPST. The spill valve OFF period TSPST is obtained in step 204 of a main routine described later. The current time value represents a time when the second reference pulse is detected. The result of the calculation is set to an output compare register (not shown in the figures).

The ECU 71 then waits for lapse of the spill valve OFF period. When the spill valve OFF period has elapsed, the electromagnetic spill valve 23 is opened (turned off). Accordingly, an injection of fuel is stopped when the spill valve OFF period has elapsed after the second reference pulse is output.

It should be noted that the spill valve OFF period TSPST corresponds to a period from a time when the second reference pulse is generated to a time when the electromagnetic spill valve 23 is open.

If the determination of step 118 is negative, that is, if CNIRQ is not equal to 10 which means that the input pulse does not correspond to the second reference pulse, the routine proceeds to step 124 without executing steps 120 and 122.

If the determination in step 120 is negative, that is, if it is determined that the second reference pulse is not a normal pulse, the routine proceeds to step 132. In step 132, actuation of the electromagnetic spill valve 23 is prohibited so as to perform a full injection. As previously discussed, the second reference pulse is a reference pulse to determine the opening time of the electromagnetic spill valve 23, that is, the stop time of the fuel injection. Therefore, if the second reference pulse is not appropriately output, an appropriate fuel injection control is not performed, resulting in deterioration of a smooth start operation of the engine. In the present embodiment, by performing steps 120 and 132, the full injection is performed when the second reference pulse corresponding to the second reference tooth is not detected. Thus, start failure of the engine can be prevented.

The above-discussed steps 110 to 122 are the process when the determinations of the steps 106 and 108 are both affirmative, that is when it is determine that the operational state of the engine corresponds to an extremely low-speed operation. Hereinafter, the process from step 110 to step 122 is referred to as an extremely low-speed process.

If the determination of steps 106 or 108 is negative, that is, if the engine is not in an extremely low-speed operational state, the extremely low-speed process is not performed, and the routine proceeds to step 124. In step 124, it is determined whether or not the NE interruption counter CNIRQ is equal to a spill valve OFF counter value CANG. The spill valve OFF counter value CANG is a value calculated in the main routine described later with reference to FIG.5. The calculation method of the spill valve OFF counter value CANG is described later.

If the determination of step 124 is affirmative, the routine proceeds to step 126. In step 126, a spill valve OFF remaining time TSP is added to the current time value, and the result is set to the output compare register. The spill valve OFF remaining time TSP is obtained by the main routine of the fuel injection control described later with reference to FIG.5.

In step 126, a spill valve drive control process is performed wherein the electromagnetic spill valve 23 is open after the spill valve OFF remaining time, a value of which is stored in the output compare register, has elapsed since the engine revolution pulse correspond to the spill valve OFF counter value CANG was input. Hereinafter, the process of step 124 and 126 is referred to as a normal control process since the this process is performed when the engine is not in the extremely low-speed operational state.

When step 126 or step 132 is completed, or if the determination of step 124 is negative, the routine proceeds to step 128. Step 128 and step 130 are performed to obtain a reference pulse interval TS which is used in the main routine described later. In step 128, it is determined whether or not the NE interruption counter CNIRQ at this time is equal to a value (CANG+1) which is a sum of the spill valve OFF counter value and 1. If it is determined that the NE interruption counter CNIRQ is equal to (CANG+1), the routine proceeds to step 130. In step 130, the NE pulse interval TNINT calculated in step 100 is stored as the reference pulse interval TS. If it is determined, in step 128, that CNIRQ is not equal to (CANG+1), the routine is ended without executing step 130.

A description will now be given, with reference to FIG.5, of the main routine of the fuel injection control process according to the present embodiment.

Steps 200 and 202 shown in FIG.5 are performed so as to obtain the spill valve OFF counter value CANG and the spill valve OFF remaining time TSP used for the above-discussed normal control process. In step 200, a final injection amount QFIN is calculated based on the engine speed NE and an opening degree of the intake throttle valve 58 (referred to as an accelerator opening degree ACCP). The final injection amount QFIN is an amount which is considered to be appropriate for the current engine condition based on the engine speed NE and the accelerator opening degree ACCP. A cooling-water temperature THW may be added to the factors used for determining the final injection amount QFIN. After the final injection amount QFIN is calculated in step 200, a final spill angle QANG is calculated, in step 202, based on the engine speed NE and the final injection amount QANG. The final spill angle QANG corresponds to an angle range of the crank angle which is required for injecting the amount of fuel determined by the final injection amount QFIN.

After the final spill angle QANG is calculated as discussed above, the spill valve OFF counter value CANG and the spill valve OFF remaining time TSP is calculated based on the final spill angle QANG. In the present embodiment, since the angle range of the crank angle corresponding to a single pulse of the engine revolution pulse is set to 7.5° CA (crank angle), the final spill angle QANG is represented by the following equation.

$$QANG=7.5xCANG+\Theta REM \quad (1)$$

Where ΘREM is a remaining angle which is less than the angle 7.5° CA corresponding to a single pulse.

Since the spill valve OFF counter value CANG is an integer, the spill valve OFF counter value is represented as follows.

$$CANG=(QANG/7.5) \quad (2)$$

Since the remaining angle ΘREM is less than the angle range 7.5° CA corresponding to a single pulse, the remaining angle of the crank angle ΘREM cannot be controlled by NE interruption counter CNIRQ. Accordingly, the spill valve OFF remaining time TSP is used to control the opening time of the electromagnetic spill valve 23. More specifically, the spill valve OFF time TSP is obtained by converting the remaining angle ΘREM into the spill valve OFF remaining time TSP with respect to time. The electromagnetic spill valve 23 is open when the spill valve OFF remaining time has elapsed since the spill valve OFF counter value CANG is detected.

The spill valve OFF remaining time TSP is calculated based on the reference pulse interval TS obtained in step 130 of FIG.4, which reference pulse TS corresponds to the NE pulse interval TNINT when the NE interruption counter CNIRQ is equal to (CANG+1).

$$TSP=(\Theta REM/7.5)xTS \quad (3)$$

In step 204, a spill valve OFF time TSPST used for the fuel injection control process in the extremely low-speed operational state is obtained. The spill valve OFF time TSPST is obtained by a map representing a graph shown in FIG.6 based on a ratio of the NE pulse interval TN1 obtained in step 112 to the NE pulse interval TN9 obtained in step 116. The NE pulse interval TN1 obtained in step 112 is the NE pulse interval TNINT when the NE interruption counter CNIRQ is equal to 1. The NE pulse interval TN9 obtained in step 116 is the NE pulse interval TNINT when the NE interruption counter CNIRQ is equal to 9.

By performing the process of step 204, the spill valve OFF time TSPST is corrected according to the intervals TN1 and TN9 of the pulses generated before the second reference pulse is generated.

Generally, when the engine is in an extremely low-speed operational state, a large fluctuation is generated in the revolution speed during a signal cycle. Accordingly, if the opening time of the electromagnetic valve 23 is determined by the pulse interval corresponding to the second reference pulse and the fuel injection amount, the above-discussed fluctuation is not reflected to the opening time of the electromagnetic spill valve 23. Thus, an accurate control of the opening time of the electromagnetic spill valve cannot be performed. However, in the present embodiment, the spill valve OFF time TSPST corresponding to the opening time of the electromagnetic spill valve 23 is obtained based on the pulse intervals TN1 and TN9 generated before the generation of the second reference pulse, the fluctuation in the revolution speed when the engine is operated at an extremely low-speed can be reflected to the spill valve OFF time TSPST. Thus, in the present embodiment, an improved accuracy of the fuel injection control process is achieved by using the spill valve OFF time TSPST.

It should be noted that although it is not shown in the main routine of FIG.5, the spill valve OFF time TSPST obtained in step 204 may be applied with a pump characteristic correction. That is, generally, the fuel injection pump 1 has variations in operating characteristics due to allowable tolerances in the component parts thereof. This variation may have seriously influences, especially when the engine is operated at the extremely low-speed. In order to eliminate this influence to achieve an accurate setting of the spill valve OFF time TSPST, the spill valve OFF time TSPST may be corrected according to the operating characteristic of each pump.

The main routine of the fuel injection control process shown in FIG.5 is ended after step 104 is completed.

A description will now be given, with reference to FIGS.7 and 8, of an operation of the fuel injection control process shown in FIGS.4 and 5. FIG.7 is a timing chart of a fuel injection operation performed by the normal control process. FIG.8 is a timing chart of a fuel injection operation performed by the extremely low-speed process. In FIGS.7 and 8, (A) indicates a value of the NE interruption counter CNIRQ, (B) indicates the spill valve OFF counter value CANG and the spill valve OFF remaining time TSP, and (C) indicates opening and closing time of the electromagnetic spill valve 23.

In the normal control process shown in FIG.7, a pulse is positively generated by each of the teeth formed on the pulser 7 since the speed of the engine is high. Thus, the ECU 71 executes the normal control process (corresponds to steps 124 and 126 in FIG. 4) wherein the electromagnetic spill valve 23 is open when the spill valve OFF remaining time TSP has elapsed since the pulse corresponding to CNIRQ (in FIG. 7, CNIRQ=14) corresponding to the spill valve OFF counter value CANG is generated.

If the normal control process is performed in the extremely low-speed operation, accurate control cannot be performed due to a missing pulse. That is, the ECU 71 increments the NE interruption counter CNIRQ each time the pulse from the revolution sensor 35 is detected. Thus, if there is a missing pulse, the NE interruption counter CNIRQ cannot indicate a correct value.

IN FIG.8, pulses corresponding to CNIRQ=12 and 13 are missing. IN this case, if the spill valve OFF counter value CANG is equal to 14 as shown in FIG.7, the ECU determines the pulse corresponding to CANG=14 as a pulse corresponding to CANG=12 since the missing two pulses are not counted. It should be noted that, in FIG.8, the NE interruption counter CNIRQ including the count error due to the missing pulses is indicated by a parenthesized number. Accordingly, in this case, the electromagnetic spill valve 23 is open at time t2 which is delayed from the correct opening time t1. This results in an excessive amount of fuel being injected.

In order to eliminate this problem, in the present embodiment, steps 106 and 108 are performed to determined whether the engine is in the extremely low-speed operation state so that the process from step 118 to step 122 is executed when it is determined that the engine is in the extremely low-speed operational state.

In the extremely low-speed control process, the electromagnetic spill valve 23 is open when the spill valve OFF time TSPST has elapsed since it is determined that the second reference pulse is generated. As discussed above, in the extremely low-speed control process, the NE interruption counter CNIRQ is not used, unlike the normal control process, so as to determine the opening time of the electromagnetic spill valve 23. That is, the extremely low-speed control process uses a time control method using the second reference pulse (corresponding to CNIRQ=10) generated by the second reference tooth. The second reference pulse is positively output irrespective of fluctuations in the speed of the engine.

Accordingly, if a pulse is missed due to fluctuations in the speed, the missing pulse never influences the opening/closing time of the electromagnetic spill valve 23. Thus, an accurate fuel injection control can be achieved. Additionally, since the electromagnetic spill valve 23 is controlled by predicting the appropriate opening time thereof based on the pulses detected at the low-speed operational state at the time of starting the engine, generation of exhaust smoke is significantly reduced as compared to the full amount injection performed by the conventional control.

A description will now be given, with reference to FIGS.9 to 11, of a second embodiment of the fuel injection control process according to the present invention. FIGS.9 and 10 are parts of a flowchart of the second embodiment of the fuel injection control process according to the present invention. This fuel injection control process is interruptedly performed by the ECU 71. FIG.11 is a main routine of the second embodiment of the fuel injection control process according to the present invention.

When the fuel injection control process shown in FIGS.9 and 10 is started, the ECU 71 calculates the NE pulse interval TNINT based on the engine revolution pulse input from the revolution sensor 35. The ECU 71 also increments the NE interruption counter CNIRQ. Further, the ECU 71 calculates a time period of the crank of the engine rotating an angle of 45°. Hereinafter, this time period is referred to as a 45° CA rotation time T45.

More specifically, the NE pulse interval TNINT calculated at this time is added to the 45° CA rotation time T45 calculated at the last time. The result is stored as the 45° CA rotation time T45. The 45° CA rotation time T45 is used to calculate the engine revolution speed NE. Generally, in a process for calculating the speed of the engine, a time period spent by the crank shaft rotating 180° CA as indicated in step 400 of the main routine (refer to FIG.11) is described later. Hereinafter, this time period is referred to as a 180° CA rotation time T180. The engine speed NE is calculated based on the 180° CA rotation time T180 by the following equation.

$$NE_{(rpm)}=60x10^{6}/(T180x2) \quad (4)$$

Additionally, the 180° CA rotation time T180 is calculated by adding the 45° CA rotation time T45 four times. Accordingly, the 45° CA rotation time T45 is a base for calculation of the engine speed NE. The 45° CA rotation time T45 is calculated based on the NE interruption counter CNIRQ and the NE pulse interval TNINT as described later with reference to steps 322 to 356. In the present embodiment, since the angle range corresponding to a single pulse is set to 7.5 CA as described before, the 45° CA rotation time T45 is set each time when the NE interruption counter CNIRQ becomes equal to 2, 8, 14 or 20. By the time the NE interruption counter CNIRQ becomes equal to 2, 8, 14 or 20, the NE pulse interval TNINT is repeatedly added according to step 300 each time the NE interruption occurs.

It is assumed that the 45° CA rotation time set at the time when the NE interruption counter CNIRQ becomes equal to 2 (CNIRQ=2) is represented by $T45_1$; the 45° CA rotation time set at the time when the NE interruption counter CNIRQ becomes equal to 8 (CNIRQ=8) is represented by $T45_2$; the 45° CA rotation time set at the time when the NE interruption counter CNIRQ becomes equal to 14 (CNIRQ=14) is represented by $T45_3$; the 45° CA rotation time set at the time when the NE interruption counter CNIRQ becomes equal to 20 (CNIRQ=20) is represented by $T45_4$.

That is, for example, if the 45° CA rotation time is $T45_2$, the 45° CA rotation time T45 is obtained by summing the NE pulse interval TNINT for each CNIRQ from 3 to 8 (corresponding to six NE interruption processes). The 45° CA rotation time T45 obtained when CNIRQ is equal to 8 is set to be $T45_2$. Similarly, if the 45° CA rotation time is $T45_3$, the 45° CA rotation time T45 is obtained by summing the NE pulse interval TNINT for each CNIRQ from 9 to 14. The 45° CA rotation time T45 obtained when CNIRQ is equal to 8 is set to be $T45_2$. $T45_4$ and $T45_1$ are obtained in the same manner.

When the NE interruption counter CNIRQ becomes equal to 2, 8, 14 or 20, the 180° CA rotation time T180 is also calculated. The 180° CA rotation time T180 is calculated by summing the 45° CA rotation time $T45_1$ to $T45_4$ as follows.

$$T180=T45_{1}+T45_{2}+T45_{3}+T45_{4} \quad (5)$$

As mentioned above, the engine speed NE is calculated based on the 45° CA rotation times $T45_1$ to $T45_4$ and the 180° CA rotation time T180. Additionally, since the 180° CA rotation time T180 is calculated based on the 45° CA rotation time T45, the 45° CA rotation time T45 is calculated in step 300.

Now returning to the description of the flowchart of FIG.9, a description will be given of step 302 and subsequent steps.

In step 302, it is determined whether or not the NE interruption counter CNIRQ is equal to 3. If it is determined that CNIRQ=3 which means the pulse at this time corresponds to the first reference pulse, the routine proceeds to step 304 to close the electromagnetic spill valve 23 so that the fuel injection operation is started. In the present embodiment, the first reference tooth is positioned adjacent to a tooth cut-out part similar to the first embodiment and, thus, the first reference pulse is positively generated and detected when the engine speed fluctuates.

On the other hand, if the engine revolution pulse input at this time does not correspond to CNIRQ=3, the routine proceeds to step 306 without executing step 304. In step 306, it is determined whether or not the start signal output from the ignition switch 78 is input. If it is determined that the start signal is input (STA ON), the routine proceeds to step 308. In step 308, it is determined whether or not the 45° CA rotation time $T45_2$ is greater than a predetermined time period, for example, 50 ms, that is, whether or not the engine is operated in the extremely low-speed operational state.

In the present embodiment, the extremely low-speed operational state is determined by using the 45° CA rotation time T45, whereas the determination is preformed based on the engine speed NE in the first embodiment. This is because, the speed of the engine is relatively high during the time period in which CNIRQ is equal to 3 to 8 when fluctuations in the engine speed is considered. Thus, pulses corresponding to CNIRQ of 3 to 8 are the pulses which are positively generated and detected.

As mentioned above, in the present embodiment, when the extremely low-speed operational state is determined, the pulses which are positively generated and detected are used. Thus, an accurate determination can be performed.

If the determinations of step 306 and 308 are both affirmative, that is, if it is determined that the engine is operated in the extremely low-speed operational state, the routine proceeds to step 310. In step 310, it is determined whether or not the NE interruption counter CNIRQ is equal to 10. The tooth corresponding to the pulse which renders CNIRQ to be equal to 10 is the second reference tooth.

The second reference tooth is positioned behind the first reference tooth with respect to the rotational direction of the pulser 7. Additionally, the second reference tooth is positioned at a crank angle at which the second reference tooth is positively detected by the revolution sensor 35 irrespective of fluctuations in the revolution speed during one revolution. It should be noted that the position of the second reference tooth can be easily experimentally determined.

If it is determined, in step 310, that the NE interruption counter CNIRQ is equal to 10, the routine proceeds to step 312. In step 312, the spill valve OFF time TSPST, which is obtained in step 428 of the main routine described later, is added to the current time value (the time when the second reference pulse is detected), and the result is set to the output compare register. Then the ECU 71 waits for lapse of the spill valve OFF time TSPST, and the electromagnetic spill valve 23 is open when the spill valve OFF time TSPST has elapsed. Accordingly, the fuel injection operation is stopped when the spill valve OFF time TSPST has elapsed since the second reference pulse, which renders CNIRQ to be equal to 10, is output and detected. It should be noted that the spill valve OFF time TSPST corresponds to a time period from the time when the second reference pulse is detected to the time when the electromagnetic valve 23 is open.

On the other hand, if the determination of step 310 is negative, that is, if the pulse input at this time does not correspond to CNIRQ=10 (which means the pulse is not the second reference pulse), the routine proceeds to step 314 without executing step 312. In step 314, pulse interval times TSST1 to TSST5 are set which are used to calculate a pulse OFF time TSPST1 and a remainder OFF time TSPST2. The pulse OFF time TSPST1 and remainder OFF time TSPST2 are used to calculate a reference pulse interval time in step 412 to step 426 of the main routine described later.

More specifically, if the NE interruption process corresponds to CNIRQ=11, the NE pulse interval TNINT calculated in step 300 of the NE interruption process at this time is stored in the RAM 83 as the pulse interval time TSST1. If the NE interruption process corresponds to CNIRQ=12, the NE pulse interval TNINT calculated in step 300 of the NE interruption process at this time is stored in the RAM 83 as the pulse interval time TSST2. If the NE interruption process corresponds to CNIRQ=13, the NE pulse interval TNINT calculated in step 300 of the NE interruption process at this time is stored in the RAM 83 as the pulse interval time TSST3. If the NE interruption process corresponds to CNIRQ=14, the NE pulse interval TNINT calculated in step 300 of the NE interruption process at this time is stored in the RAM 83 as the pulse interval time TSST4. If the NE interruption process corresponds to CNIRQ=15, the NE pulse interval TNINT calculated in step 300 of the NE interruption process at this time is stored in the RAM 83 as the pulse interval time TSST5.

As mentioned above, the second reference tooth is positioned at a predetermined crank angle so as to be positively detected by the revolution sensor 35 irrespective of fluctuations in the engine speed during one cycle. In the present embodiment, the tooth corresponding to a pulse which renders CNIRQ to be equal to 14 (this tooth is referred to a third reference tooth) is positioned at a predetermined crank angle so as to be positively detected by the revolution sensor 35 irrespective of fluctuations in the engine speed during one cycle.

As shown in FIGS.12 and 13, it is found by experiments that a drop part X of fluctuation in the engine speed is between the pulse corresponding to CNIRQ=10 and the pulse corresponding to CNIRQ=14. The speed of the engine during one cycle is lowest in the drop part X. The previously discussed missing of a pulse occurs in the drop part X of the fluctuation in engine speed of revolution. In the present embodiment, the second reference tooth is provided before the drop part X, and the third reference tooth is provided after the drop part X. That is, the missing of a pulse may occur between the second reference tooth and the third reference tooth. It should be noted that FIG.12 shows the fluctuation in the engine revolution speed during one cycle and the engine revolution pulses output from the revolution sensor 35 in the previous cycle, and FIG.13 shows the fluctuation in the engine revolution speed during one cycle and the engine revolution pulses output from the revolution sensor 35 in the current cycle.

In step 316, it is determined whether or not a tooth cut-out part is detected. If it is determined that the tooth cut-out part is detected, the routine proceeds to step 318 to set a pulse missing number CDNE.

In the present embodiment, as discussed with reference to FIGS.7 and 8, a crank angle range corresponding to a single pulse is 7.5° CA. Thus, the NE interruption counter CNIRQ immediately before the detection of the tooth cut-out part is equal to 20 when the missing of a pulse does not occur. In other words, the NE interruption counter CNIRQ corresponding to the tooth cut-out part becomes equal to 21. In this case, it is determined that the missing of a pulse has not occurred, and thus the pulse missing number CDNE is set to 0 (CDNE=0).

When the NE interruption counter CNIRQ corresponding to the tooth cut-out part is equal to 20 (CNIRQ=20), it is determined that one pulse is missing. Thus, in this case, the pulse missing number CDNE is set to 1 (CDNE=1). When the NE interruption counter CNIRQ corresponding to the tooth cut-out part is equal to 19 (CNIRQ=19), it is determined that two pulses are missing. Thus, in this case, the pulse missing number CDNE is set to 2 (CDNE=2). When the NE interruption counter CNIRQ corresponding to the tooth cut part is equal to 18 (CNIRQ=18), it is determined that three pulses are missing. Thus, in this case, the pulse missing number CDNE is set to 3 (CDNE=3). Accordingly, in step 318, the number of missing pulses can be determined by referring to the value of the pulse missing number CDNE. When the process of step 318 is completed, the routine proceeds to step 319 to reset the NE interruption counter CNIRQ to zero, and then the routine proceeds to step 320.

The above-mentioned process of steps 310 to 318 is a process performed when the determination of steps 306 and 308 are both affirmative, that is, it is determined that the engine is operated in the extremely low-speed operational state. Hereinafter, the process of steps 310 to 318 is referred to as the extremely low-speed control process.

If the determination of step 306 and step 308 are both negative, that is, if the engine is not in the extremely low-speed operational state, the extremely low-speed control process is not performed and, thus, the routine proceeds to step 320. In step 320, it is determined whether or not the NE interruption counter at this time is equal to the spill valve OFF counter value CANG. The spill valve OFF counter value CANG is a value calculated in the main routine described later with reference to FIG.11.

If the determination of step 320 is affirmative, the routine proceeds to step 322. In step 322, a remaining time dTSPST is calculated based on the value in the output compare register and the current time value. The remaining time dTSPST corresponds to a time period remaining for the time when the spill valve OFF time TSPST has elapsed. In step 324, it is determined whether or not dTSPST calculate in step 320 is greater than a value obtained by multiplying the reference pulse interval TS, which is set in step 330 when the NE interruption process is performed, by a predetermined constant K. If it is determined that dTSPST calculate in step 322 is greater than a value obtained by multiplying the reference pulse interval TS by a predetermined constant K, the routine proceeds to step 326. In step 326, the spill valve remaining time TSP, which is obtained in the main routine described later with reference to FIG.11, is added to the current time value, and the result is set to the output compare register.

If the determination of step 324 is affirmative, the normal control process is the same as that performed in steps 124 and 126 of the above-mentioned first embodiment.

If it is determined, in step 324, that the remaining dTSPST is less than the value obtained by multiplying the reference pulse interval TS by the predetermined constant K, or if it is determined, in step 320, that the NE interruption counter CNIRQ of the NE interruption process at this time is not equal to the spill OFF counter value CANG, the routine proceeds to step 328 without executing step 326. That is, in the present embodiment, if it is determined, in step 324, that the remaining time dTSPST is less than the value obtained by multiplying the reference pulse interval TS by the predetermined constant K, the control based on the spill valve OFF remaining time TSP performed in the normal control process is prohibited. Then the electromagnetic spill valve 23 is open when the spill valve OFF remaining time TSPST set in step 312 has elapsed. The reason for this will be described in the followings with reference to FIG.18.

It is assumed that the spill valve OFF counter CANG is equal to 13, and the NE interruption process at this time corresponds to CNIRQ equals to 13. In order to simplify, the descriptions will be separately given for the case in which there is a missing pulse and the case in which there is no missing pulse.

A description will now be given of a case in which there is no missing pulse. The NE interruption counter CNIRQ when there is no missing pulse is equal to the "true CNIRQ" as indicated in FIG.18. In this case, it is assumed that the remaining time dTSPST calculate in step 322 is a relatively long time period which is close to the interval of a single pulse. The remaining time when there is no missing pulse is referred to as dTSPST1.

When a missing pulse occurs (in the figure, the pulse corresponding to CNIRQ=11 is missing), the spill valve OFF counter value CANG which is equal to 13 should be originally equal to 14. That is the spill valve OFF counter is less than the number of missing pulses. Thus, when the missed pulse occurs, the remaining time dTSPST calculated in step 322 is shorter by a time period corresponding to a single pulse than the remaining time dTSPST1 when no pulse is missing.

A description will now be given of a problem when the process of step 324 is not performed. It is assumed that the time when the spill valve OFF time TSPST lapses is equal to the time when the pulse corresponding to CNIRQ=14 is raised. The spill valve OFF time TSPST slightly fluctuates due to fluctuation in the revolution speed of the engine. If the spill valve OFF time TSPST is slightly later than the rising time of the pulse corresponding to CNIRQ=14, and if there is a missing pulse, the spill valve OFF time TSPST is not elapsed when it is determined that the spill valve OFF counter value CANG becomes equal to 13. Accordingly the electromagnetic spill valve does not open by the process of step 312.

Accordingly, when the process of step 324 is not performed, step 326 is immediately performed so that the spill valve OFF remaining time TSP is set with reference to a time when it is determined that the spill valve OFF counter value CANG is equal to 13. In this case, the fuel injection period is longer by the duration indicated by dotted lines of a SPV time chart in FIG.18. Thus, an appropriate fuel injection is not performed since an excessive amount of fuel is injected.

In the present embodiment, such a problem is eliminated by performing the process of step 324 and 326. That is, it is determined, in step 324, whether or not the remaining time dTSPST is greater than the value obtained by a multiplication of the reference pulse interval TS set at the previous NE interruption process and the predetermined constant K; if the determination is affirmative, it is determined that there is no missing pulse, and thus the normal control process is preformed by setting the spill valve OFF remaining time TSP; on the other hand, if the determination of step 324 is negative, it is determined that there is a missing pulse, and execution of the normal control process in step 326 is prohibited so as to open the electromagnetic valve 23 by the spill valve OFF time TSPST set in step 312. As a result, injection of an excessive amount of fuel is positively prevented.

Now returning to FIG.9, a description will be given of a process after step 328.

Step 328 and step 329 are performed to obtain the reference pulse interval TS used in step 324 and the main routine described later. In step 328, it is determined whether or not the NE interruption counter CNIRQ of the NE interruption at this time is equal to a value obtained by adding 1 to the spill valve OFF counter value CANG (CANG+1). If it is determines that CNIRQ=CANG+1 , the routine proceeds to step 330 to store the NE pulse interval TNINT as the reference pulse interval TS. If it is determined that CNIRQ is not equal to (CANG+1), the routine proceeds to step 332 without executing step 330.

Steps 332 to 356 are performed so as to obtain the above-mentioned 45° CA rotation times $T45_1$ to $T45_4$. As previously mentioned, the 45° CA rotation time T45 is updated for each NE interruption process by performing step 300. Thus, the 45° CA rotation time T45 at the time when CNIRQ is equal to 2, 8, 14 and 20 corresponds to the 45° CA rotation times $T45_1$ to $T45_4$, respectively. Accordingly, in step 332, it is determined whether or not the NE interruption counter CNIRQ is equal to 2, and if CNIRQ=2, the value of T45 is stored as the 45° CA rotation time $T45_1$. In step 336, T45 is reset to prepare for the next calculation of the 45° CA rotation time T45. If it is determined, in step 332, that the NE interruption counter CNIRQ is not equal to 2, the routine proceeds to step 338 without executing steps 334 and 336.

In step 338, it is determined whether or not the NE interruption counter CNIRQ is equal to 8. If CNIRQ=8, the 45° CA rotation time $T45_2$ set in the previous NE interruption is stored in the RAM 83 as a previous 45° CA rotation time $T45_{2OL}$. The previous 45° CA rotation times $T45_{2OL}$ is used in step 428 of the main routine shown in FIG.11.

In step 342, the value of T45 when CNIRQ is equal to 8 is stored as the 45° CA rotation time $T45_2$. In step 344, T45 is reset to prepare for the next calculation of the 45° CA rotation time T45. If it is determined, in step 338, that the NE interruption counter CNIRQ is not equal to 8, the routine proceeds to step 346 without executing steps 340 to 344.

In step 346, it is determined whether or not the NE interruption counter CNIRQ is equal to 14. If CNIRQ=14, the current value of the 45° CA rotation time $T45_2$ is stored in the RAM 83 as the 45° CA rotation time $T45_3$. In step 350, T45 is reset to prepare for the next calculation of the 45° CA rotation time T45. If it is determined, in step 346, that the NE interruption counter CNIRQ is not equal to 14, the routine proceeds to step 352 without executing steps 348 and 350.

In step 352, it is determined whether or not the NE interruption counter CNIRQ is equal to 20. If CNIRQ=20, the current value of the 45° CA rotation time T45 is stored in the RAM 83 as the 45° CA rotation time $T45_4$. In step 354, T45 is reset to prepare for the next calculation of the 45° CA rotation time T45. If it is determined, in step 352, that the NE interruption counter CNIRQ is not equal to 20, the routine is ended without executing steps 354 and 356.

A description will now be given, with reference to a flowchart of FIG.11, of the main routine of the present embodiment.

When the main routine shown in FIG. 11 is started, the 180° CA rotation time T180 and the engine speed NE are calculated in step 400. The 180° CA rotation time T180 is calculated by summing the 45° CA rotation times $T45_1$ to $T45_4$. The engine speed NE is calculated by the equation (4) based on the 180° CA rotation time T180. After the 180° CA rotation time T180 and the engine speed NE are calculated in step 400, the routine proceeds to step 402 to calculate the final injection amount QFIN based on the engine speed NE and the accelerator opening degree ACCP of the intake throttle valve 58. In step 404, the final spill angle QANG and the spill valve OFF remaining time TSP are calculated based on the engine speed NE and the final injection amount QFIN. The process of step 404 is the same as that performed in step 202 of the first embodiment, and a description thereof will be omitted.

In steps 406 and 408, it is determined whether or not the engine is operated in the extremely low-speed operational state as has been explained with reference to steps 306 and 308. If the determination of step 406 or 408 is negative, that is, if it is determined that the engine is not in the extremely low-speed operational state, the main routine is ended without executing the steps after step 410. On the other hand, if the determinations of step 406 and 408 are both affirmative, the routine proceeds to step 410. In step 410, an initial injection amount QASTF is calculated. Specifically, the initial injection amount QASTF is obtained by adding a pump characteristic correction constant QVRP to an initial injection amount constant QAST stored in the ROM 82 of the ECU 71. The pump characteristic correction constant is provided for correcting variation in the pump characteristic due to permitted tolerances of the fuel injection pump 1. The initial injection amount QASTF is represented by a value of a crank angle.

Steps 412 to 423 are performed to calculate the spill valve OFF time TSPST which is used in step 312 of the flowchart shown in FIG.9. In the present embodiment, the spill valve OFF time TSPST is calculated based on the time period (reference pulse interval) between the second reference pulse corresponding to CNIRQ=10 and the third reference pulse corresponding to CNIRQ=14. The second reference pulse is generated by the second reference tooth, and the third reference pulse is generated by the third reference tooth.

A description will now be given, with reference to FIG.12, of the reference pulse interval. FIG.12 shows fluctuation in the engine speed and the engine revolution pulses output from the revolution sensor 35.

The reference pulse interval is defined as the time period between the rising of the second reference pulse (CNIRQ=10) in the previous cycle and the rising of the third reference pulse (CNIRQ=14) in the previous cycle. If a value of the initial injection amount QASTF is between the pulse corresponding to CNIRQ=14 and the pulse corresponding to CNIRQ=15, the reference pulse interval is obtained by adding the remainder OFF time TSPST2 to the pulse OFF time TSPST1. The pulse OFF time TSPST1 is a period from the rising of the pulse corresponding to CNIRQ=10 to the rising of the pulse corresponding to CNIRQ=14. The remainder OFF time TSPST2 is a remainder which is less than the period corresponding to a single pulse. The remainder OFF time is obtained by a time/angle conversion using a period between the rising of the third pulse and the rising of the subsequent pulse. That is, the time period TSPST from the rising of the second pulse to the opening time of the electromagnetic spill valve 23 is represented by the equation TSPST=TSPST1+TSPST2 .

As mentioned above, in the present embodiment, the actual operational state is reflected to the reference pulse interval time. The opening time of the electromagnetic spill valve 23 is determined by calculating the spill valve OFF time TSPST based on the reference pulse interval. Thus, the above-mentioned prediction control can be more accurate than a prediction control in which the spill valve opening time is calculated based on data stored beforehand in the form of map information or table information with reference to a certain reference pulse since influences of permitted tolerances of performance, environmental conditions and battery condition of each engine are eliminated.

It should be noted that the reason for using the reference pulses of the previous cycle is that the reference pulses at the present time cannot be set until the fuel injection operation at this time is completed as apparent from the definition of the reference signals. That is, an occurrence of missing pulses is determined after the present cycle is ended, and thus the pulse corresponding to the third pulse can be determined only after the present cycle is completed.

A description will now be given, with reference to the example of FIG.14, of a calculation method of the time TSPST between the second reference pulse and the third reference pulse. Each of the pulse interval times TSST1 to TSST5 is calculated in the process of step 314. If there is no missing pulse, the pulse OFF time TSPST1 is calculated by the following equation as shown in FIG.14.

$$TSPST1=TSST1+TSST2+TSST3+TSST4+TSST5 \quad (6)$$

Additionally, the remainder OFF time TSPST2 is obtained by converting the crank angle into a time period, the crank angle being an angle at which the pulse corresponding to CNIRQ=14 is raised and an angle at which the fuel injection is stopped. More specifically, the remainder OFF time TSPST2 is obtained by the following equation based on the pulse interval time TSST5 and the initial fuel amount QASTF, where #$E00 is a crank angle at which the third reference pulse corresponding to CNIRQ=14 is raised.

$$TSPST2=TSST5x(QASTF-\#\$E00)/7.5 \quad (7)$$

In the area between the pulses corresponding to CNIRQ=10 and CNIRQ=15, the pulses corresponding to CNIRQ=10, 14 and 15 are positively generated irrespective of fluctuations in the revolution speed of the engine. However, due to existence of the drop part X (refer to FIGS12 and 13) of the fluctuation in the engine revolution during one cycle between the pulses corresponding to CNIRQ=11 to CNIRQ=13, there is a possibility that missing pulse will occur within the area between the pulses corresponding to CNIRQ=11 and 13. If missing pulses occur, the NE interruption counter CNIRQ is set to a number different from the original number. This influences the pulse interval times TSST1 to TSST5. Thus, if the pulse OFF time TSPST1 and the remainder OFF time TSPST2 are calculated by the above-mentioned equations (6) and (7) when missing pulses occur, an accurate reference pulse interval cannot be obtained.

Accordingly, in the present embodiment, the reference pulse interval is calculated for each occurrence of missing pulses by taking advantage that the number of missing pulses is recognized by checking the pulse missing number CDNE which is set in the process of step 318 shown in FIG.9.

A description will now be given, with reference to FIGS.15 to 17, of a calculation of the reference pulse interval performed based on the number of occurrences of the missing of pulses.

FIG.15 shows an example in which one pulse is missing (CDNE=1), that is, the pulse corresponding to CNIRQ=11 is missing. In the example of FIG.15, the pulse interval times TSST1 to TSST4 are set in the process of step 314 due to the missing pulse. Accordingly, when a single pulse is missing, the pulse OFF time TSPST1 and the remainder OFF time TSPST2 are calculated by the following equations.

$$TSPST1=TSST1+TSST2+TSST3 \quad (8)$$

$$TSPST2=TSST4x(QASTF-\#\$E00)/7.5 \quad (9)$$

FIG.16 shows an example in which two pulses are missing (CDNE=2), that is, the pulses corresponding to CNIRQ=11 and 12 are missing. In the example of FIG.16, the pulse interval times TSST1 to TSST3 are set in the process of step 314 due to the missing pulses. Accordingly, when two pulses are missing, the pulse OFF time TSPST1 and the remainder OFF time TSPST2 are calculated by the following equations.

$$TSPST1=TSST1+TSST2 \quad (10)$$

$$TSPST2=TSST3x(QASTF-\#\$E00)/7.5 \quad (11)$$

FIG.17 shows an example in which three pulses are missing (CDNE=3), that is, the pulses corresponding to CNIRQ=11, 12 and 13 are missing. In the example of FIG.17, the pulse interval times TSST1 to TSST2 are set in the process of step 314 due to the missing of the pulses. Accordingly, when three pulses are missing, the pulse OFF time TSPST1 and the remainder OFF time TSPST2 are calculated by the following equations.

$$TSPST1=TSST1 \quad (12)$$

$$TSPST2=TSST2x(QASTF-\#\$E00)/7.5 \quad (13)$$

A description will now be given of the process of steps 412 to 426 shown in FIG.11 on the basis of the description given above.

In step 412, it is determined whether or not the pulse missing number CDNE is equal to 0, that is, whether or not missing of pulses has occurred. If it is determined that there is no missing pulse, the routine proceeds to step 414 to calculate the pulse OFF time TSPST1 and the remainder OFF time TSPST2 by the equations (6) and (7). If the determination of step 412 is negative, the routine proceeds to step 416.

In step 416, it is determined whether or not the pulse missing number CDNE is equal to 1, that is, whether or not the missing of one pulse has occurred. If it is determined that there is one missing pulse, the routine proceeds to step 418 to calculate the pulse OFF time TSPST1 and the remainder OFF time TSPST2 by the equations (8) and (9). If the determination of step 416 is negative, the routine proceeds to step 420.

In step 420, it is determined whether or not the pulse missing number CDNE is equal to 2, that is, whether or not the missing of two pulses has occurred. If it is determined that there are two missing pulses, the routine proceeds to step 422 to calculate the pulse OFF time TSPST1 and the remainder OFF time TSPST2 by the equations (10) and (11). If the determination of step 420 is negative, the routine proceeds to step 424.

In step 424, it is determined whether or not the pulse missing number CDNE is equal to 3, that is, whether or not missing of three pulses has occurred. If it is determined that there are three missing pulses, the routine proceeds to step 426 to calculate the pulse OFF time TSPST1 and the remainder OFF time TSPST2 by the equations (12) and (13). If the determination of step 424 is negative, the routine proceeds to step 428.

In step 428, the time period from the second reference pulse to the opening time of the electromagnetic spill valve 23 is calculated by summing the pulse OFF time TSPST1 and the remainder OFF time TSPST2 which are obtained in steps 412 to 426. Then, the result of calculation (TSPST1+TSPST2) is corrected by using the previous 45° CA rotation time $T45_{2OL}$ obtained in step 340 and the 45° CA rotation time $T45_2$ obtained in step 342. More specifically, the result of calculation (TSPST1+TSPST2) is multiplied by a ratio ($T45_2/T45_{2OL}$) of the 45° CA rotation time $T45_2$ to the previous 45° CA rotation time $T45_{2OL}$. The corrected value is set as the spill valve OFF time TSPST.

The above-mentioned correction is performed for the reason that there may be a large difference between the reference pulse interval of the previous cycle and that of the present cycle when a large fluctuation in the revolution speed of the engine is generated in the extremely low-speed operational state. That is, if the spill valve OFF time is calculated simply based on the reference pulse interval to which the fluctuation in the engine revolution in the previous cycle is reflected, an accurate opening time of the electromagnetic valve 23 may not be performed when there is a large difference in the engine revolution between the previous cycle and the current cycle. However, in the present embodiment, since the result of calculation (TSPST1+TSPST2) is multiplied by the ratio ($T45_2/T45_{2OL}$) of the 45° CA rotation time $T45_2$ to the previous 45° CA rotation time $T45_{2OL}$, the fluctuation in the engine revolution can be reflected to the opening time of the electromagnetic spill valve 23. Thus, an accurate control of the opening time of the electromagnetic spill valve 23 based on the current operational state of the engine is achieved.

The present invention is not limited to the specifically disclosed embodiments, and variations and modifications may be made without departing from the scope of the present invention.

In a fuel injection control apparatus, generation of exhaust smoke is reduced and a revolution speed of a crank shaft (40) of an associated engine (2) is prevented from being decreased by controlling an electromagnetic spill valve according to a pulse signal positively output at any revolution speed of the engine. A fuel injection pump (1) has a spill valve (23) which opens to stop fuel injected to the engine, a revolution detector detecting revolution of the crank shaft (40) to output consecutive pulses corresponding to each tooth of a pulser (7). An amount of fuel to be injected is calculated in accordance with operational states of the engine (2). The spill valve is closed when the engine (2) is operated at an extremely-low speed. A closing time is determined when a first reference pulse is detected. The first reference pulse is generated by a first reference tooth provided in the vicinity of a tooth cut-out part. The spill valve (23) is open when a spill valve opening time period has elapsed since a second reference pulse is generated when it is determined that the internal combustion engine is operated at the extremely low-speed. The second reference pulse is generated by a second reference tooth provided behind the first reference tooth with respect to a rotational direction of the pulser (7). The spill valve opening time period is calculated based on a period of a pulse preceding the second reference pulse and a calculated amount of fuel to be injected.

## Claims

**1.** A fuel injection control apparatus for an internal combustion engine (2), comprising:

a fuel injection pump (1) having a spill valve (23) returning fuel to an inlet side of said fuel injection pump (1) by being open so that the fuel is not injected to said internal combustion engine (2);
a revolution detector (35) detecting revolutions of a crank shaft (40) of the engine (2), said revolution detector (35) having a gear-like pulser (7) and an electromagnetic pickup, said pulser (7) rotating in synchronization with revolutions of said crank shaft (40) and having at least one tooth cut-out part in which no tooth is provided, said electromagnetic pickup sensing movement of each tooth formed on said pulser (7) so as to generate and output consecutive pulses corresponding to each tooth; and
fuel injection amount calculating means for calculating an amount of fuel to be injected to said internal combustion engine (2) in accordance with operational states of the internal combustion engine (2),
characterized in that:
extremely low-speed operation state detecting means determines whether or not said internal combustion engine (2) is operated at an extremely low-speed;
spill valve closing means closes the spill valve (23) when said internal combustion engine (2) is operated at the extremely-low speed, a closing time of said spill valve (23) being determined based on detection of a first reference pulse generated by a first reference tooth provided in the vicinity of the tooth cut-out part; and
spill valve opening means opens said spill valve (23) when a spill valve opening time period has elapsed since a second reference pulse is generated when it is determined that the internal combustion engine (2) is operated at the extremely low-speed, said second reference pulse being generated by a second reference tooth provided behind said first reference tooth with respect to a rotational direction of said pulser (7), said spill valve opening time period being calculated based on a period of a pulse preceding to said second reference pulse and an amount of fuel calculated by said fuel injection amount calculating means.

**2.** The fuel injection control apparatus as claimed in claim 1, characterized in that the pulses generated before said second reference pulse include a first pulse and a second pulse, and said spill valve opening time period being calculated in accordance with periods of said first pulse and said second pulse.

**3.** The fuel injection control apparatus as claimed in claim 2, characterized in that said first pulse is adjacent to said first reference pulse, and said second pulse is adjacent to said second reference pulse.

**4.** The fuel injection control apparatus as claimed in one of claims 1-3, characterized in that

said spill valve opening means calculates a target spill valve opening time period based on the amount of fuel calculated by said fuel injection amount calculating means, said target spill valve opening time period being divided into a pulse period corresponding to a multiple of a period of a single pulse and a remainder period which is less than the period corresponding to a single pulse, said spill valve (23) being open at a time when said remainder period has elapsed since a number of pulses included in said target spill valve opening time period have been counted when it is determined by said extremely low-speed operation state detecting means that said internal combustion engine (2) is not operated in the extremely low-speed operation state.

5. The fuel injection control apparatus as claimed in one of claims 1-4, characterized in that said second reference tooth is provided in a position where said second reference pulse is positively detected irrespective of fluctuation in engine revolution speed during one cycle.

6. The fuel injection control apparatus as claimed in claim 5, characterized in that said position of said second reference tooth is experimentally determined.

7. A fuel injection control apparatus for an internal combustion engine (2), comprising:

a fuel injection pump (1) having a spill valve (23) returning fuel to an inlet side of said fuel injection pump (1) by being open so that the fuel is not injected to said internal combustion engine (2);
a revolution detector (35) detecting revolutions of a crank shaft (40) of said engine (2), said revolution detector (35) having a gear-like pulser (7) and an electromagnetic pickup, said pulser (7) rotating in synchronization with revolutions of said crank shaft (40) and having at least one tooth cut-out part in which no tooth is provided, said electromagnetic pickup sensing movement of each tooth formed on said pulser (7) so as to generate and output consecutive pulses corresponding to each tooth; and
fuel injection amount calculating means for calculating an amount of fuel to be injected to said internal combustion engine (2) in accordance with operational states of said internal combustion engine (2),
characterized in that:
extremely low-speed operation state detecting means determines whether or not said internal combustion engine (2) is operated at an extremely low-speed;
spill valve closing means closes said spill valve (23) when said internal combustion engine (2) is operated at the extremely-low speed, a closing time of said spill valve (23) being determined based on detection of a first reference pulse generated by a first reference tooth provided in the vicinity of said tooth cut-out part;
reference pulse period storing means calculates and stores a reference pulse period corresponding to a pulse between a second reference pulse generated by a second reference tooth and a third reference pulse generated by a third reference tooth, said second reference tooth and said third reference tooth being provided behind said first reference tooth with respect to a rotational direction of said pulser (7), the lowest revolution speed of said crank shaft (40) occurring between a time when said second pulse is generated and a time when said third reference pulse is generated; and
spill valve opening means opens said spill valve (23) when a spill valve opening time period has elapsed since generation of said second reference pulse when it is determined that said internal combustion engine (2) is operated at the extremely low-speed, said spill valve opening time period being calculated based on said reference pulse period stored in a previous cycle and an amount of fuel calculated by said fuel injection amount calculating means.

8. The fuel injection control apparatus as claimed in claim 7, characterized in that a fourth reference tooth and a fifth reference tooth are provided between said first reference tooth and said second reference tooth, a time period between a fourth reference pulse generated by said fourth reference tooth and a fifth reference pulse generated by said fifth reference tooth being calculated, said spill valve opening time period being corrected in accordance with a relationship between said time period obtained in the previous cycle and said time period obtained in the current cycle.

9. The fuel injection control apparatus as claimed in any one of claims 1-8, characterized in that

said spill valve opening means calculates a target spill valve opening time period based on the amount of fuel calculated by said fuel injection amount calculating means, said target spill valve opening time period being divided into a pulse period corresponding to a multiple of a period of a single pulse and a remainder period less than the period corresponding to a single pulse, an opening time of said spill valve (23) is changed when the number of pulses included in said target spill valve opening time period has been counted before said spill valve opening time period has elapsed so that said spill valve (23) is open at a time when said remainder period has elapsed since said number of pulses has been counted; and said spill valve opening means calculates a remaining time period of said spill valve opening time period for said extremely low-speed operational state at a time when said number of pulses is counted, the change of said opening time of said spill valve (23) being prohibited when said remaining time period is less than a pulse period in the previous cycle which pulse period corresponds to the last pulse period included in said target spill valve opening time period in the current cycle.

10. The fuel injection control apparatus as claimed in one of claims 7-9, characterized in that said second reference tooth and said third reference tooth are provided in positions where said second reference pulse and said third reference pulse are positively detected irrespective of fluctuation in engine revolution speed during one cycle.

11. The fuel injection control apparatus as claimed in claim 10, characterized in that said positions of said second reference tooth and said third reference tooth are experimentally determined.

12. The fuel injection control apparatus as claimed in one of claims 1-11, characterized in that a full injection amount is performed when said second reference pulse is not detected.

13. The fuel injection control apparatus as claimed in one of claim 1-12, characterized in that said extremely low-speed operation state detecting means determines occurrence of the extremely low-speed operation state based on a period of a plurality of consecutive pulses generated when a revolution speed of said crank shaft (40) is relatively high in each cycle.

FIG. 1

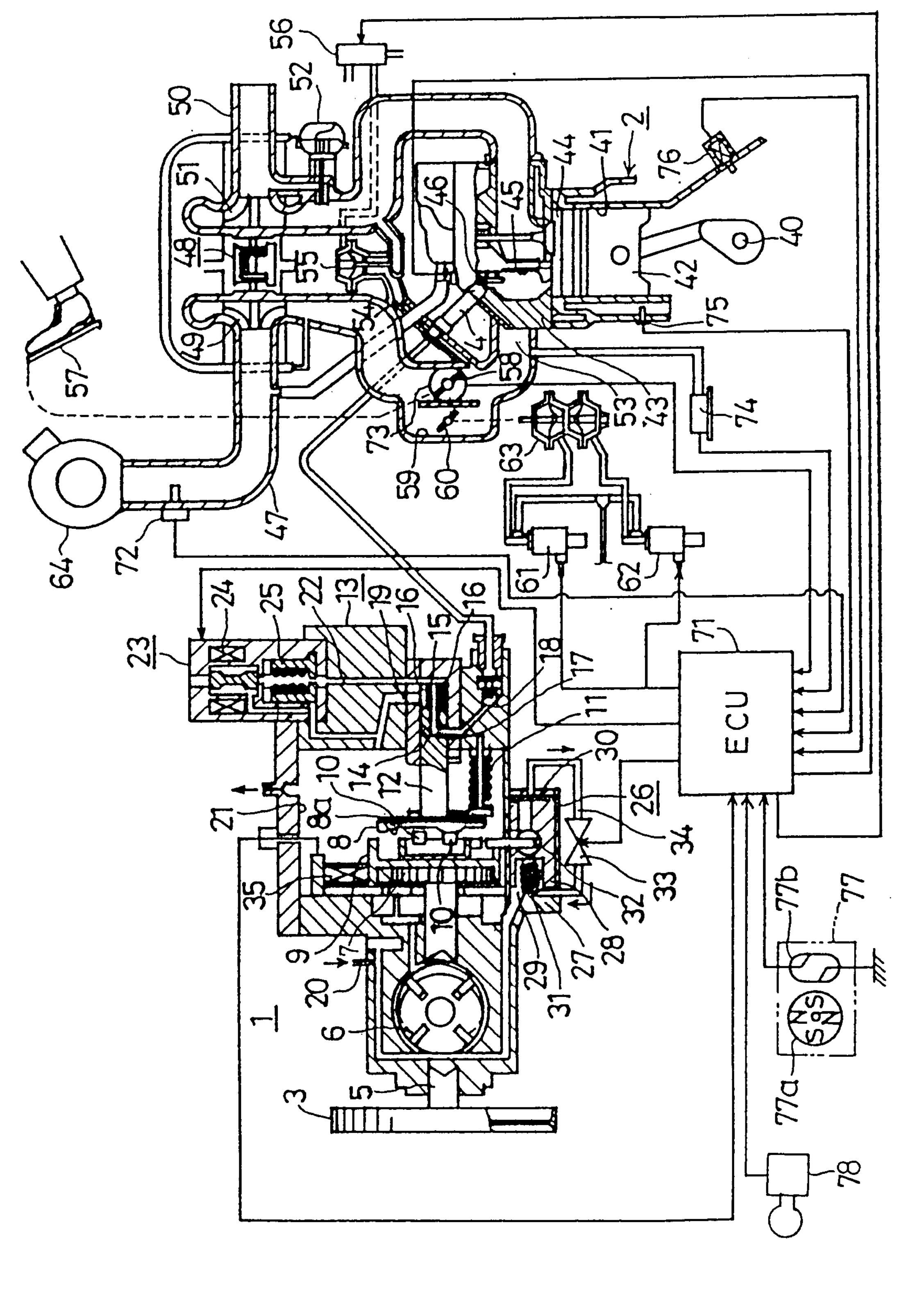

FIG. 2

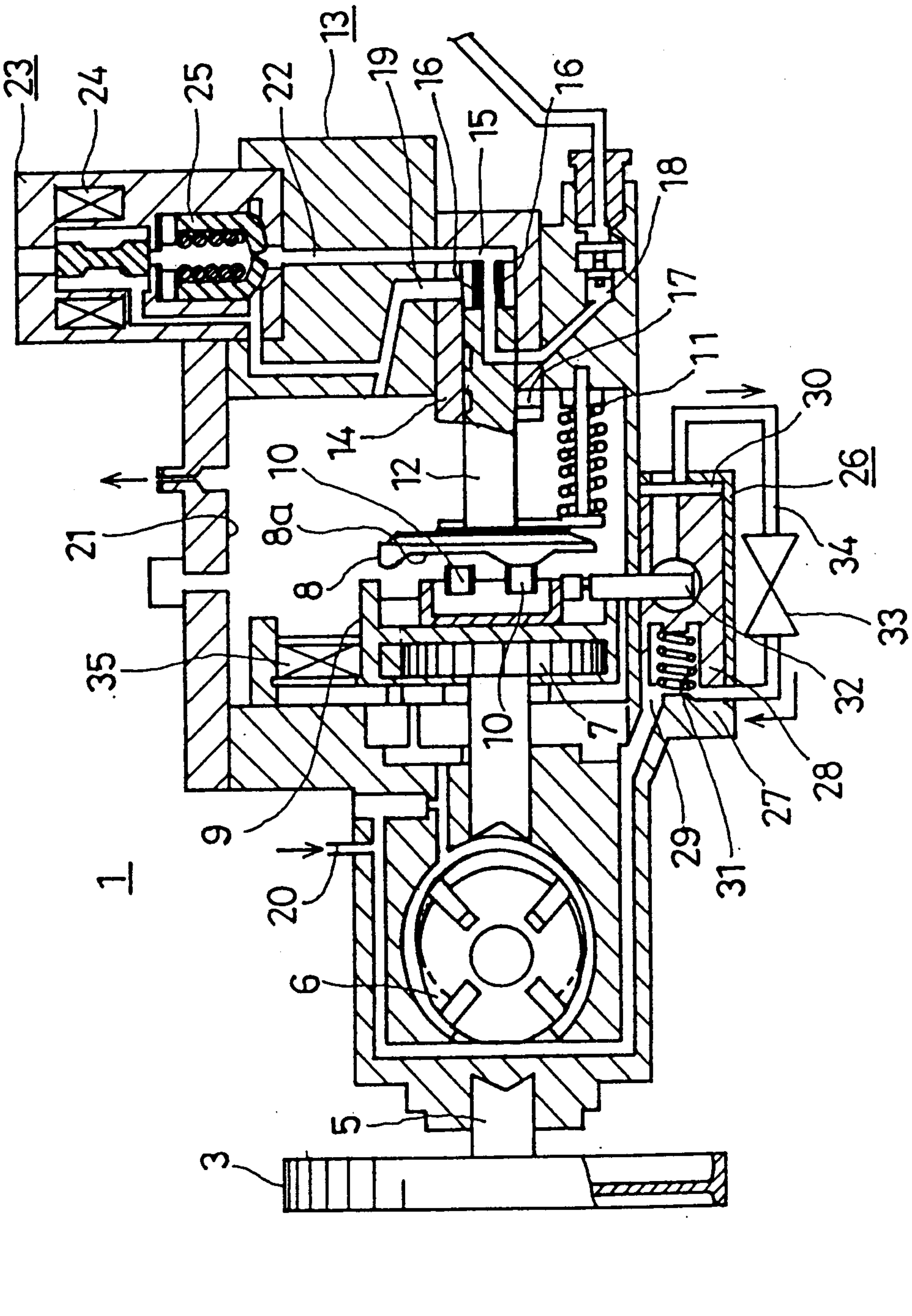
1
3
5
6
7
8
8a
9
10
11
12
13
14
15
16
17
18
19
20
21
22
23
24
25
26
27
28
29
30
31
32
33
34
35

FIG. 3

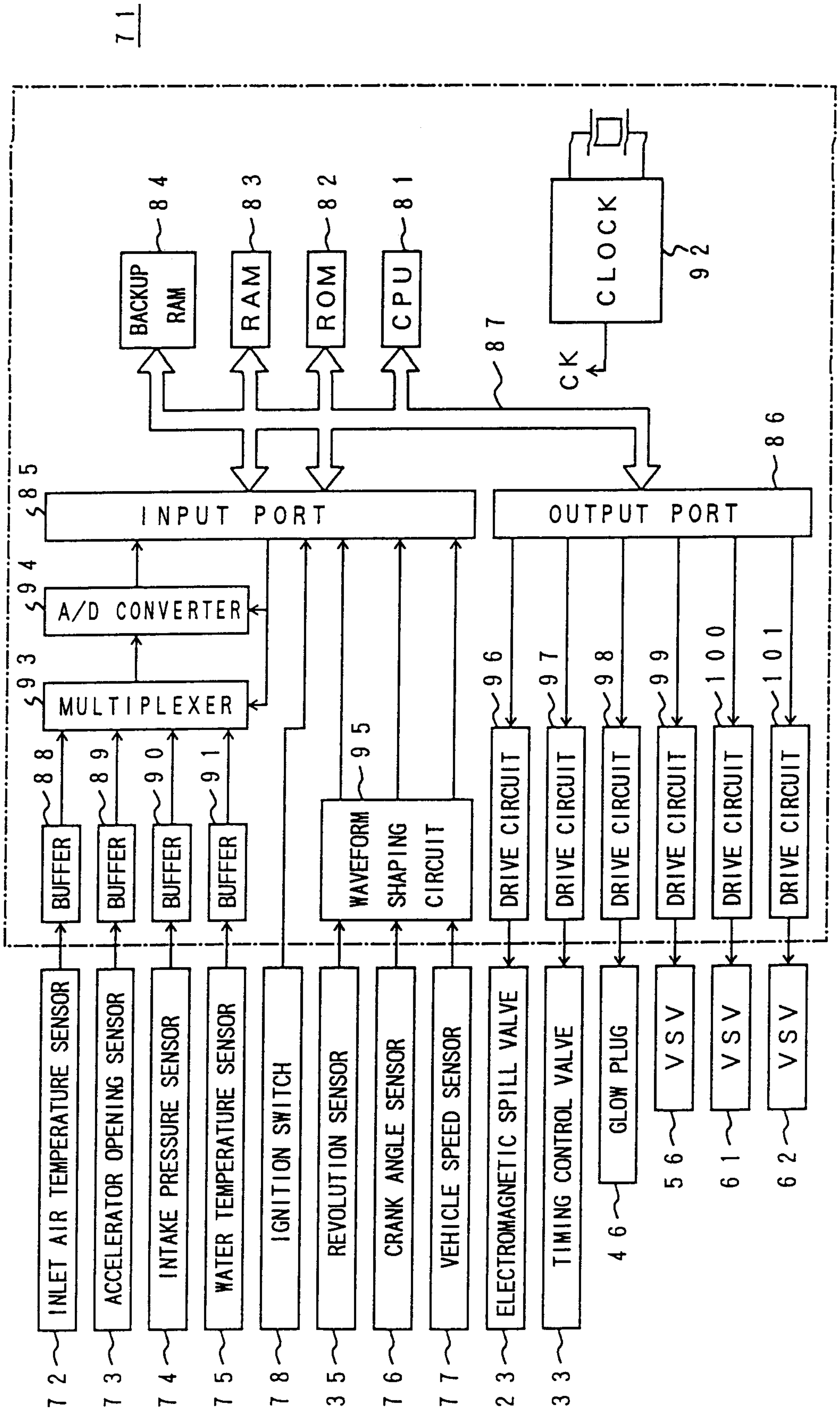
71
BACKUP RAM
84
RAM
83
ROM
82
CPU
81
CLOCK
92
CK
87
INPUT PORT
85
OUTPUT PORT
86
A/D CONVERTER
94
MULTIPLEXER
93
BUFFER
88
BUFFER
89
BUFFER
90
BUFFER
91
WAVEFORM SHAPING CIRCUIT
95
DRIVE CIRCUIT
96
DRIVE CIRCUIT
97
DRIVE CIRCUIT
98
DRIVE CIRCUIT
99
DRIVE CIRCUIT
100
DRIVE CIRCUIT
101
INLET AIR TEMPERATURE SENSOR
72
ACCELERATOR OPENING SENSOR
73
INTAKE PRESSURE SENSOR
74
WATER TEMPERATURE SENSOR
75
IGNITION SWITCH
78
REVOLUTION SENSOR
35
CRANK ANGLE SENSOR
76
VEHICLE SPEED SENSOR
77
ELECTROMAGNETIC SPILL VALVE
23
TIMING CONTROL VALVE
33
GLOW PLUG
46
VSV
56
VSV
61
VSV
62

F I G. 4

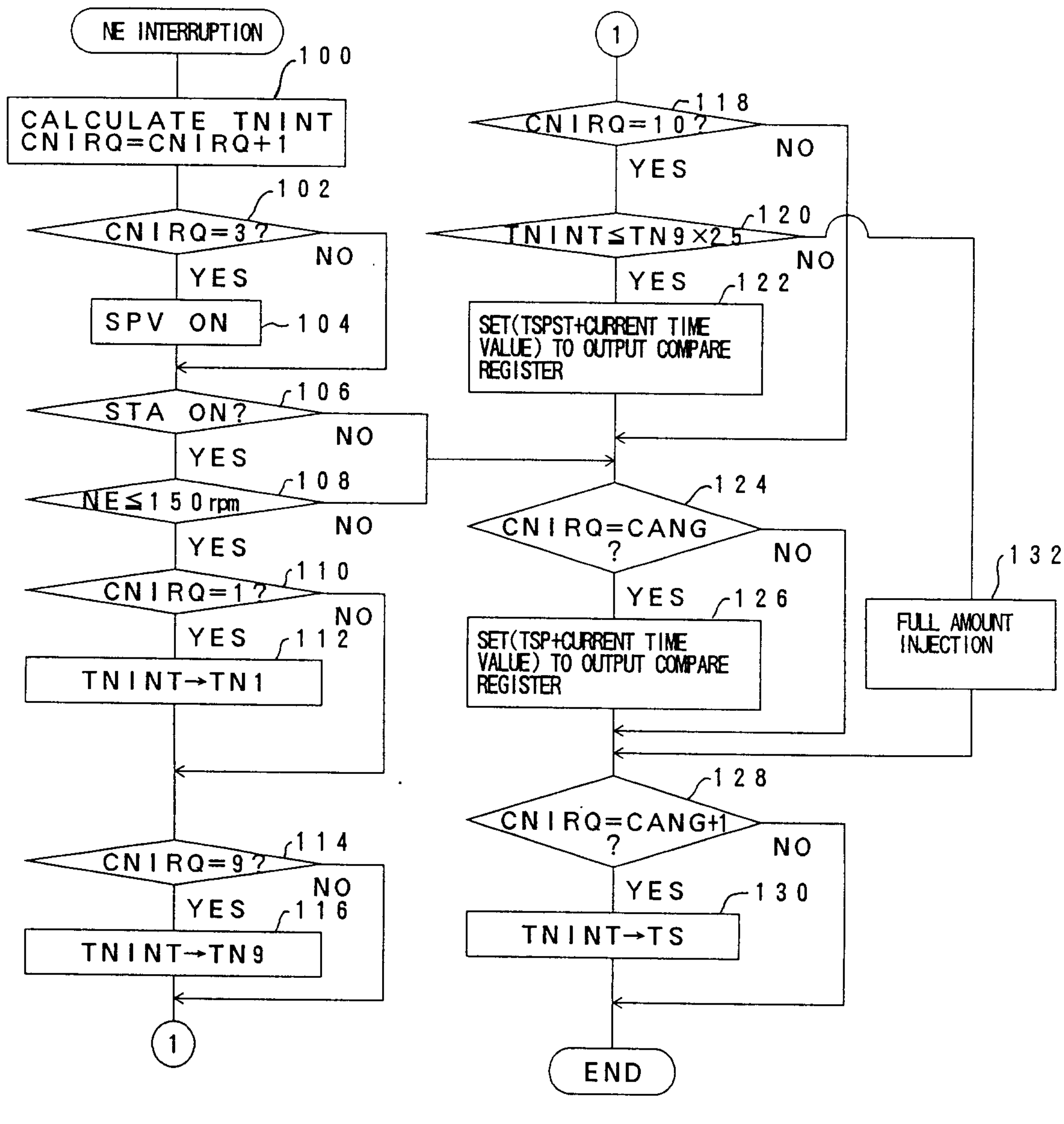
NE INTERRUPTION
100
CALCULATE TNINT
CNIRQ=CNIRQ+1
102
CNIRQ=3?
NO
YES
SPV ON
104
106
STA ON?
NO
YES
108
NE≦150rpm
NO
YES
110
CNIRQ=1?
NO
YES
112
TNINT→TN1
114
CNIRQ=9?
NO
YES
116
TNINT→TN9
1
1
118
CNIRQ=10?
NO
YES
120
TNINT≦TN9×2.5
NO
YES
122
SET(TSPST+CURRENT TIME VALUE) TO OUTPUT COMPARE REGISTER
124
CNIRQ=CANG ?
NO
YES
126
SET(TSP+CURRENT TIME VALUE) TO OUTPUT COMPARE REGISTER
132
FULL AMOUNT INJECTION
128
CNIRQ=CANG+1 ?
NO
YES
130
TNINT→TS
END

FIG. 5

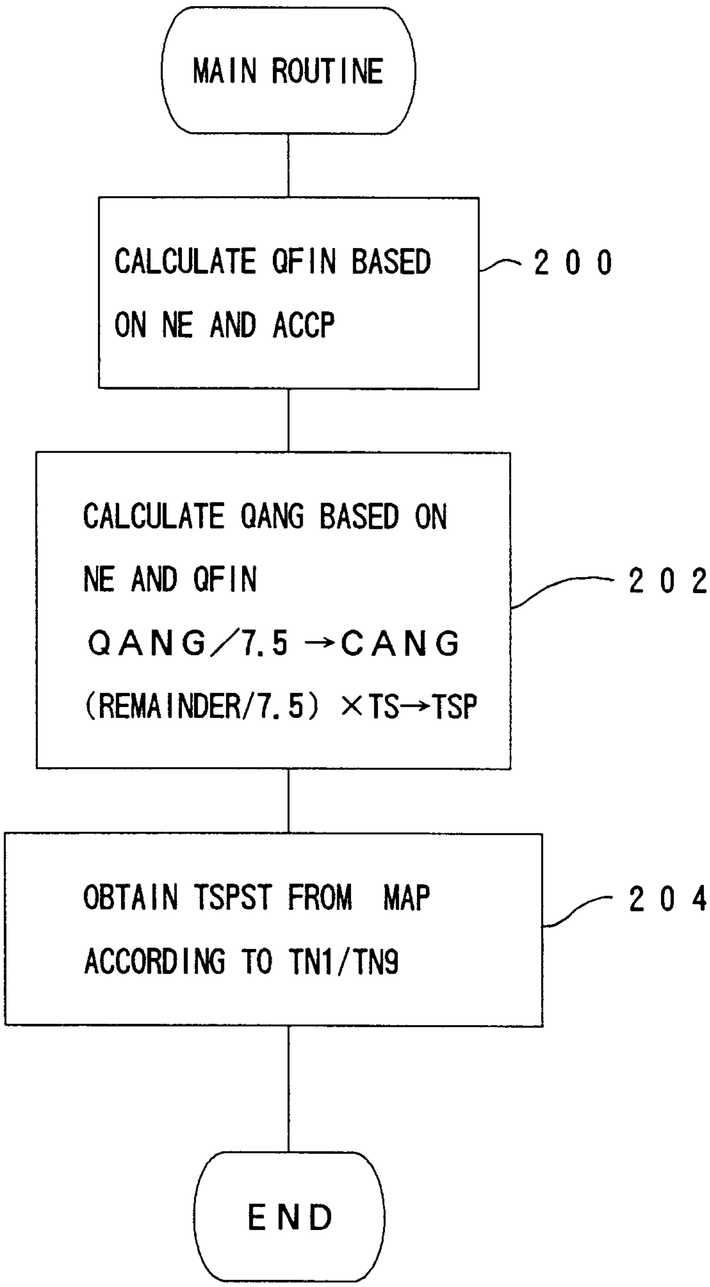
MAIN ROUTINE
CALCULATE QFIN BASED ON NE AND ACCP
200
CALCULATE QANG BASED ON NE AND QFIN
QANG/7.5 →CANG
(REMAINDER/7.5) ×TS→TSP
202
OBTAIN TSPST FROM MAP ACCORDING TO TN1/TN9
204
END

FIG. 6

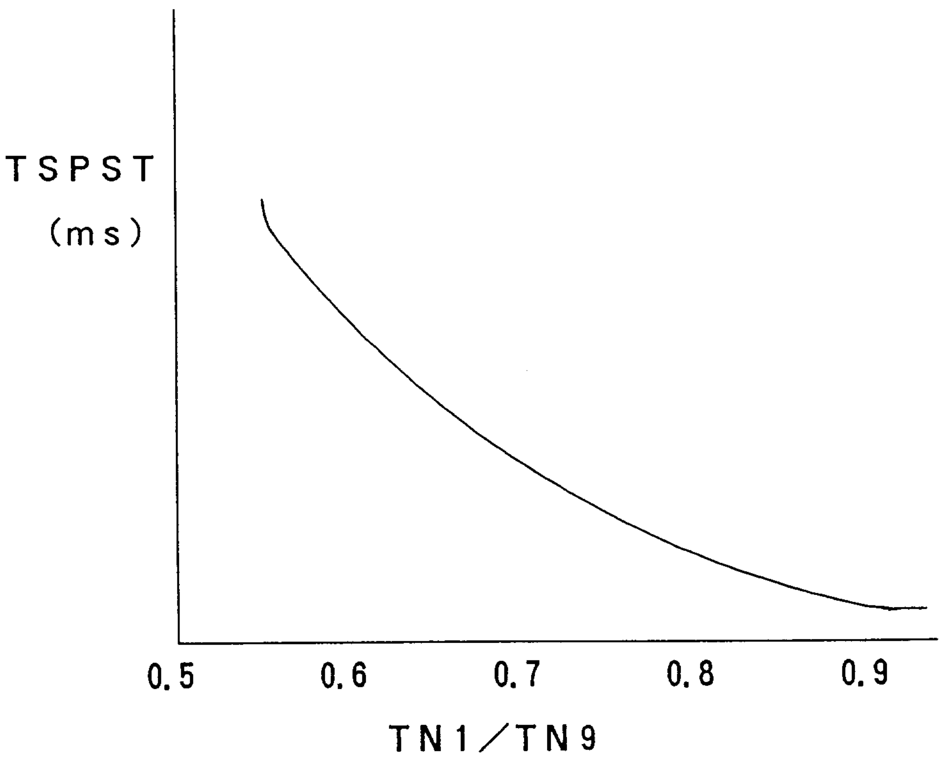

FIG. 7

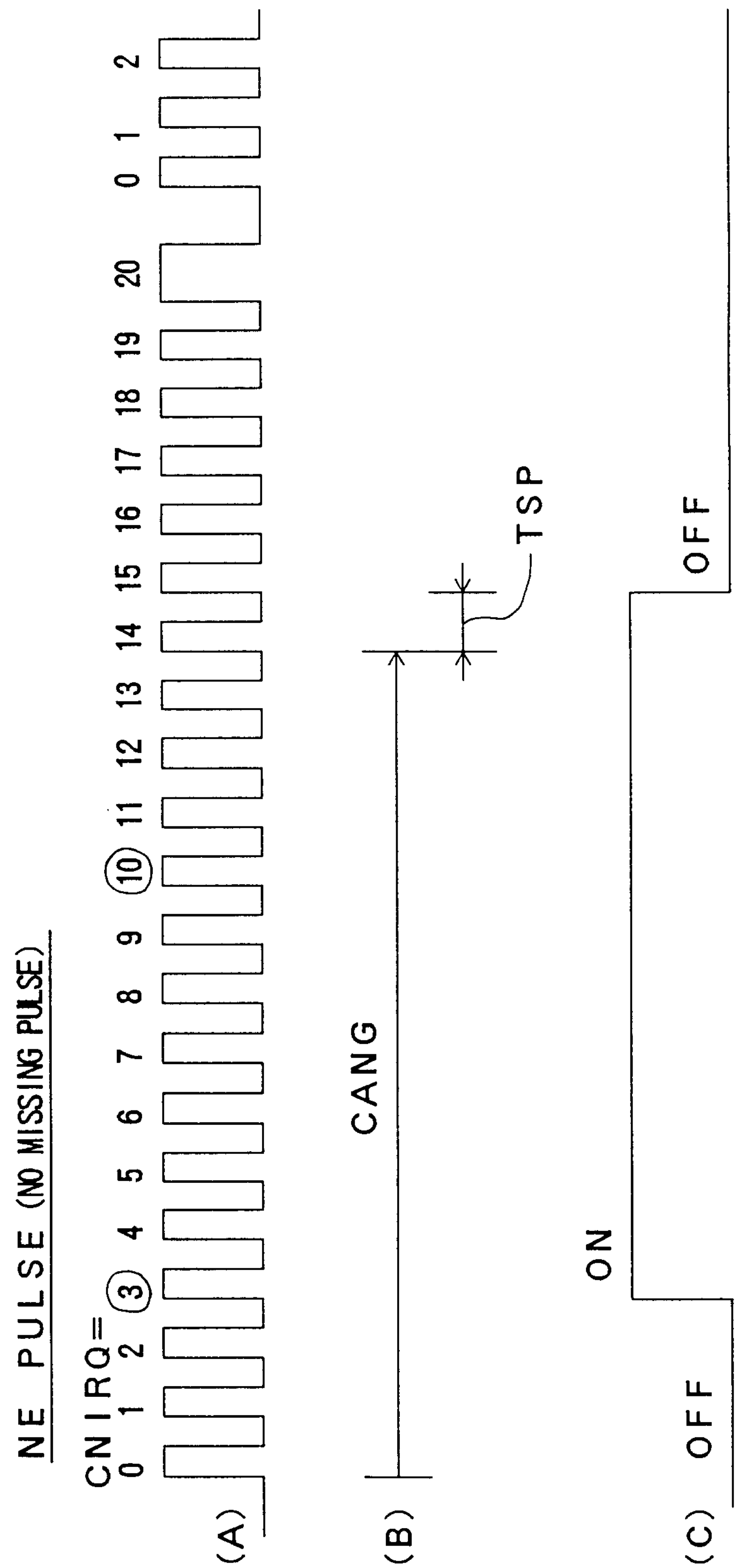
NE PULSE (NO MISSING PULSE)
CNIRQ=
0 1 2 3 4 5 6 7 8 9 10 11 12 13 14 15 16 17 18 19 20 0 1 2
(A)
(B)
CANG
TSP
(C)
OFF
ON
OFF

FIG. 8

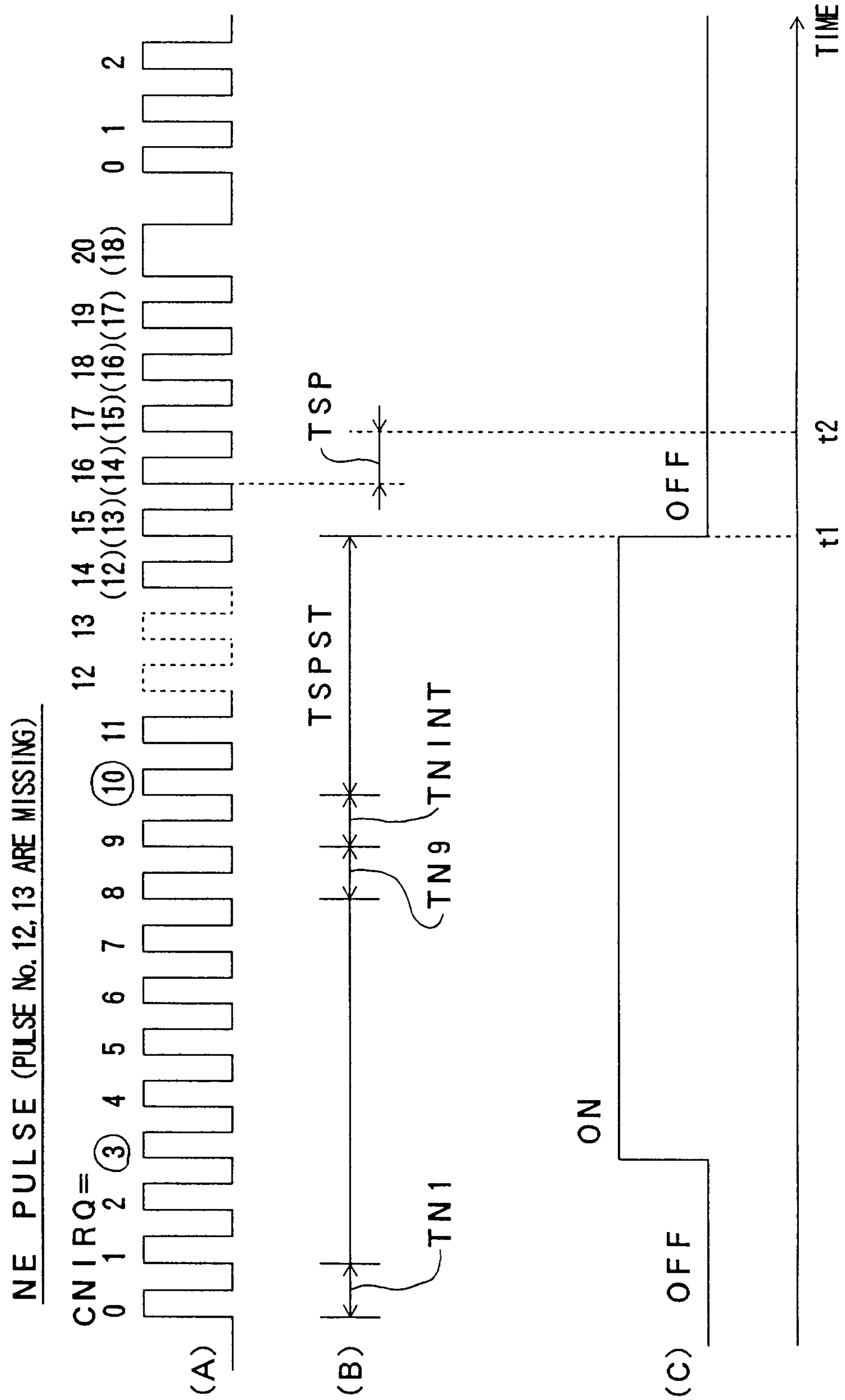
NE PULSE (PULSE No. 12, 13 ARE MISSING)
CNIRQ=
0 1 2 3 4 5 6 7 8 9 10 11 12 13 14 15 16 17 18 19 20 0 1 2
(12)(13)(14)(15)(16)(17)(18)
(A)
(B)
(C)
TN1
TN9
TNINT
TSPST
TSP
OFF
ON
OFF
t1
t2
TIME

FIG. 9

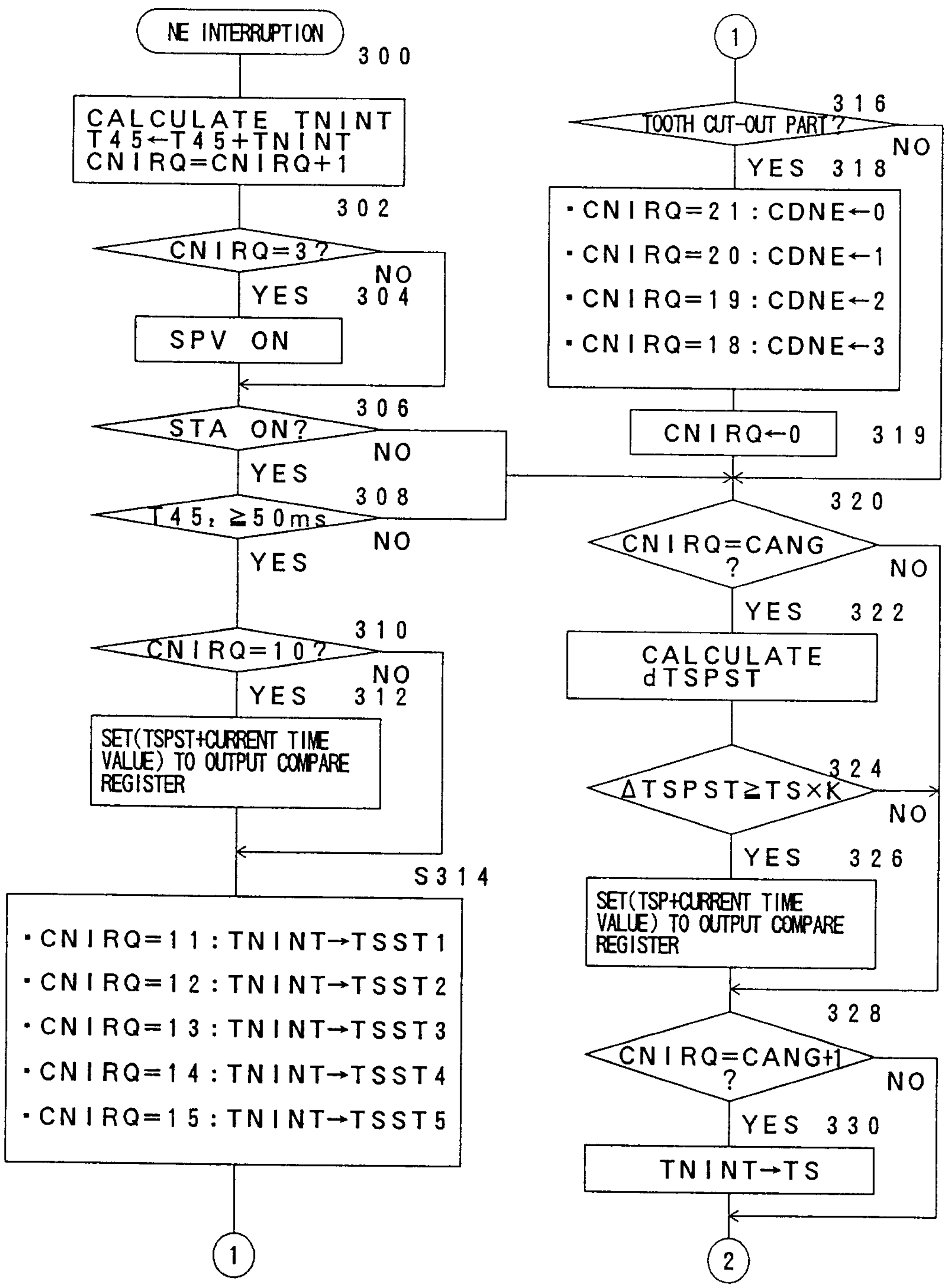
NE INTERRUPTION
300
CALCULATE TNINT
T45←T45+TNINT
CNIRQ=CNIRQ+1
302
CNIRQ=3?
NO
YES
304
SPV ON
306
STA ON?
NO
YES
308
T45₁ ≥50ms
NO
YES
310
CNIRQ=10?
NO
YES
312
SET(TSPST+CURRENT TIME VALUE) TO OUTPUT COMPARE REGISTER
S314
・CNIRQ=11:TNINT→TSST1
・CNIRQ=12:TNINT→TSST2
・CNIRQ=13:TNINT→TSST3
・CNIRQ=14:TNINT→TSST4
・CNIRQ=15:TNINT→TSST5
1
1
316
TOOTH CUT-OUT PART?
NO
YES
318
・CNIRQ=21:CDNE←0
・CNIRQ=20:CDNE←1
・CNIRQ=19:CDNE←2
・CNIRQ=18:CDNE←3
CNIRQ←0
319
320
CNIRQ=CANG ?
NO
YES
322
CALCULATE dTSPST
324
ΔTSPST≧TS×K
NO
YES
326
SET(TSP+CURRENT TIME VALUE) TO OUTPUT COMPARE REGISTER
328
CNIRQ=CANG+1 ?
NO
YES
330
TNINT→TS
2

FIG. 10

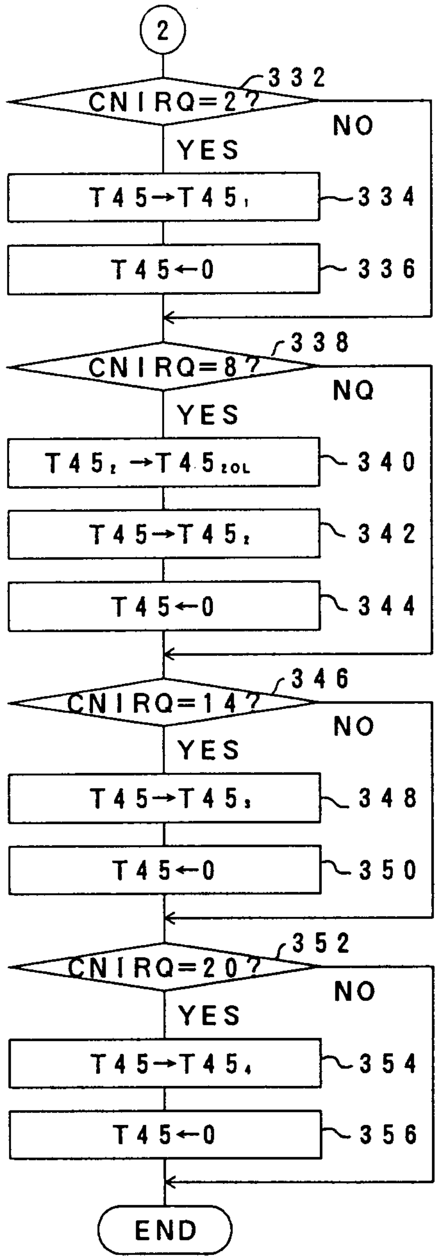
2
332
CNIRQ=2?
NO
YES
T45→T45₁
334
T45←0
336
338
CNIRQ=8?
NO
YES
T45₂→T45₂OL
340
T45→T45₂
342
T45←0
344
346
CNIRQ=14?
NO
YES
T45→T45₃
348
T45←0
350
352
CNIRQ=20?
NO
YES
T45→T45₄
354
T45←0
356
END

FIG. 11

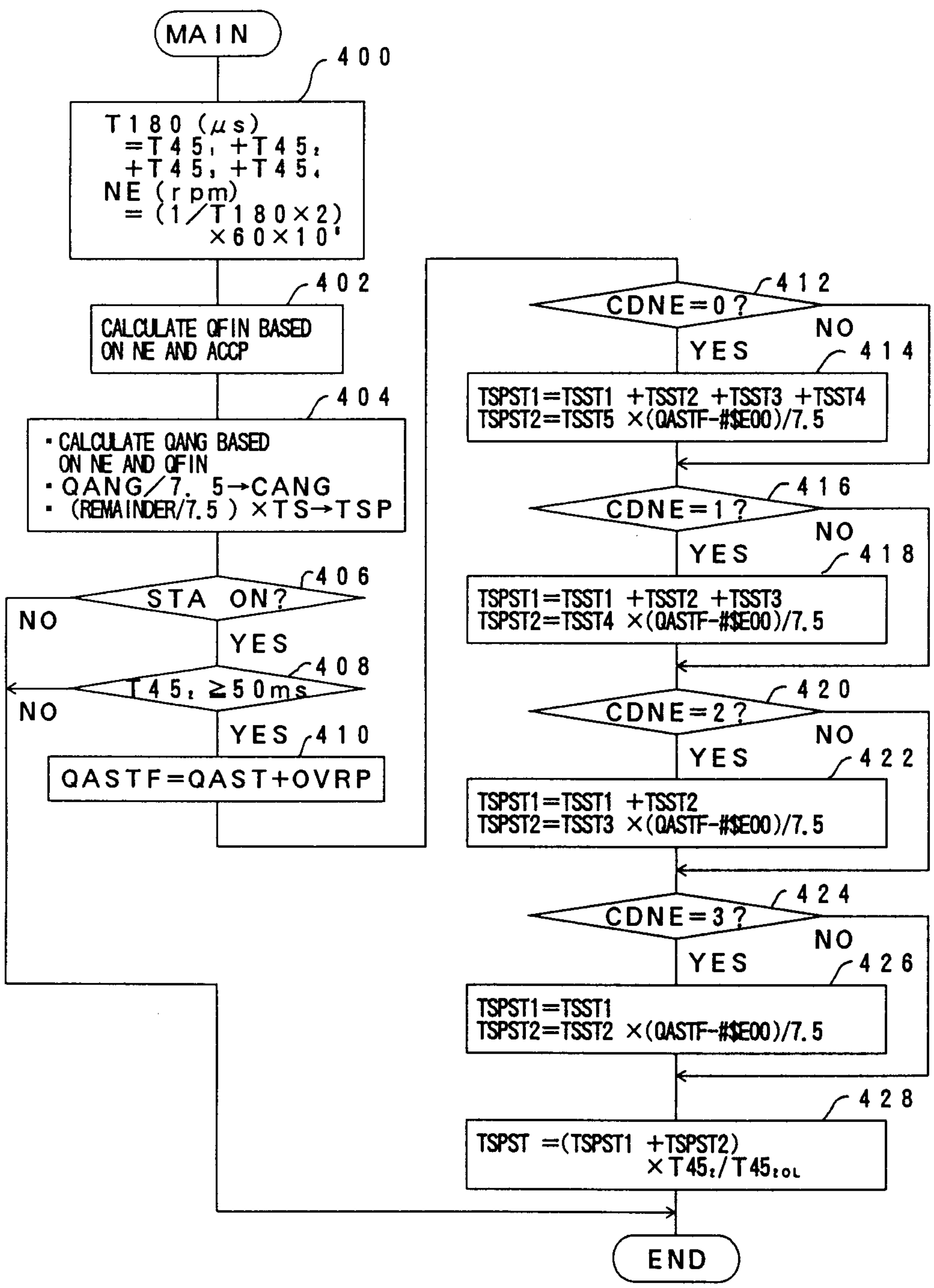
MAIN
400
T180 (μs) =T45₁ +T45₂ +T45₃ +T45₄
NE (rpm) = (1/T180×2) ×60×10⁶
402
CALCULATE QFIN BASED ON NE AND ACCP
404
・CALCULATE QANG BASED ON NE AND QFIN
・QANG/7.5→CANG
・(REMAINDER/7.5) ×TS→TSP
406
STA ON?
NO
YES
408
T45₁ ≥50ms
NO
YES
410
QASTF=QAST+OVRP
412
CDNE=0?
NO
YES
414
TSPST1=TSST1 +TSST2 +TSST3 +TSST4
TSPST2=TSST5 ×(QASTF-#$E00)/7.5
416
CDNE=1?
NO
YES
418
TSPST1=TSST1 +TSST2 +TSST3
TSPST2=TSST4 ×(QASTF-#$E00)/7.5
420
CDNE=2?
NO
YES
422
TSPST1=TSST1 +TSST2
TSPST2=TSST3 ×(QASTF-#$E00)/7.5
424
CDNE=3?
NO
YES
426
TSPST1=TSST1
TSPST2=TSST2 ×(QASTF-#$E00)/7.5
428
TSPST =(TSPST1 +TSPST2) ×T45₁/T45ₜₒₗ
END

FIG. 12

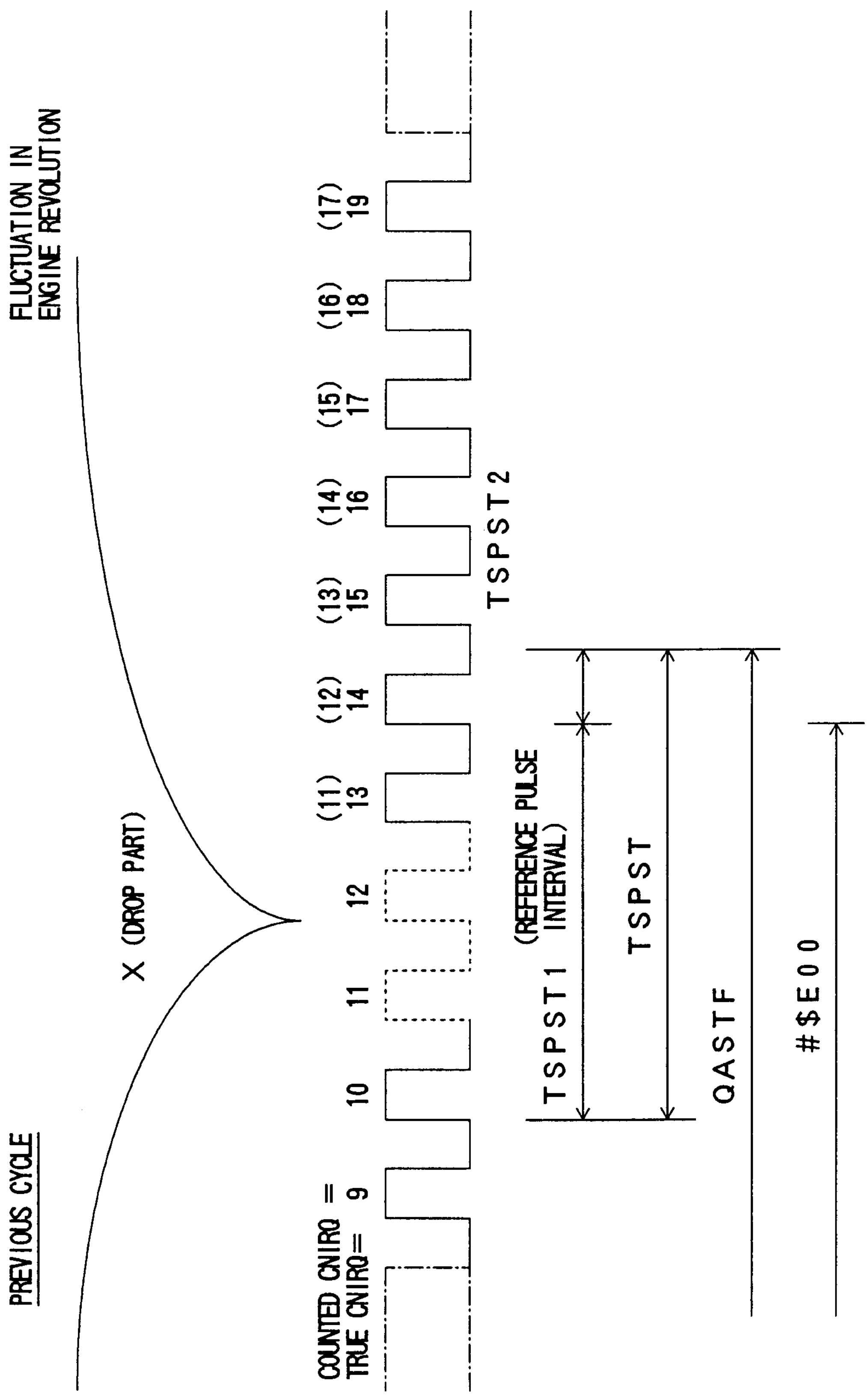
PREVIOUS CYCLE
FLUCTUATION IN ENGINE REVOLUTION
X (DROP PART)
COUNTED CNIRQ = 9 10 11 12 (11) (12) (13) (14) (15) (16) (17)
TRUE CNIRQ= 9 10 11 12 13 14 15 16 17 18 19
TSPST2
TSPST1 (REFERENCE PULSE INTERVAL)
TSPST
QASTF
#$E00

FIG. 13

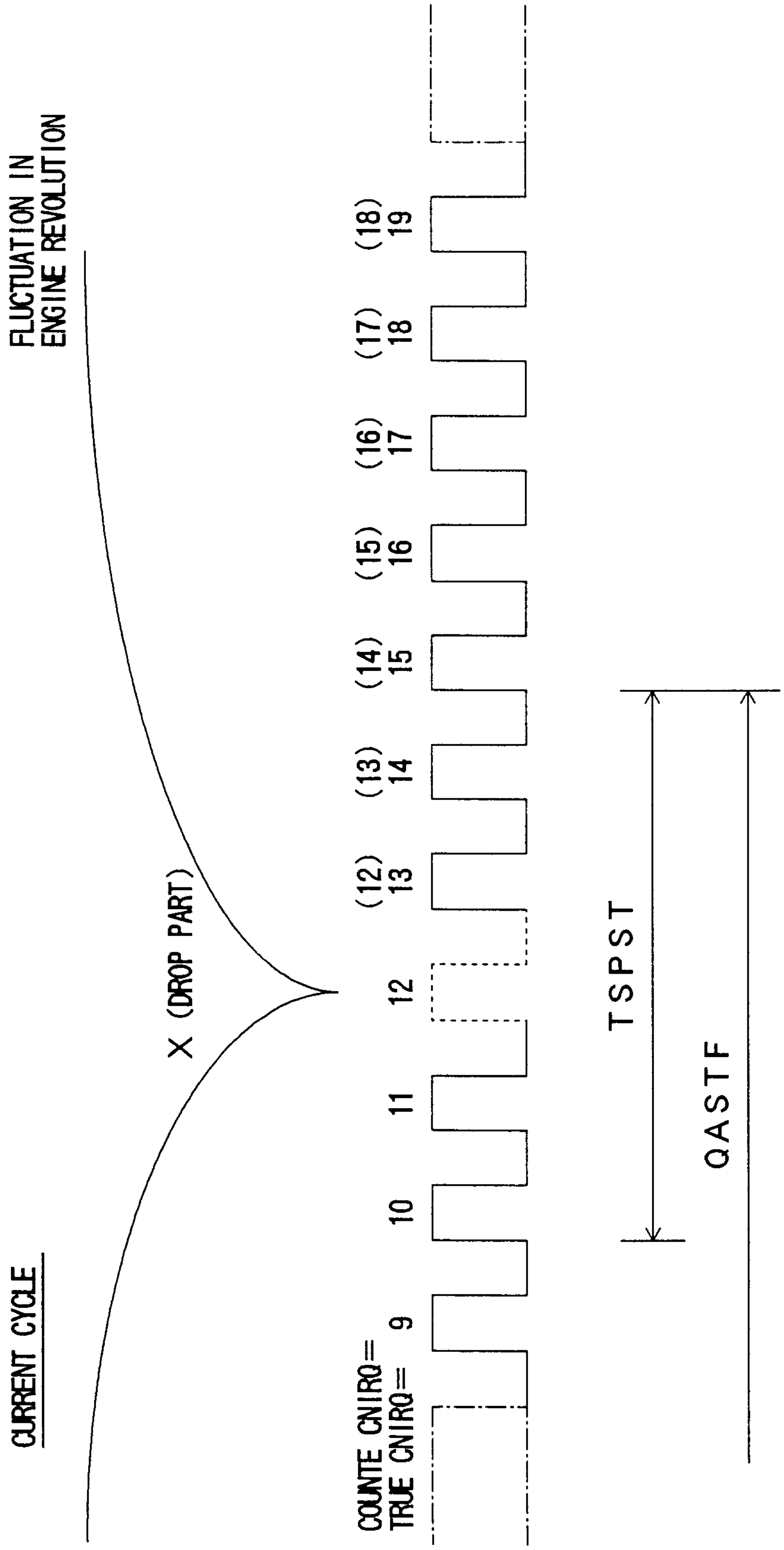
CURRENT CYCLE
X (DROP PART)
FLUCTUATION IN ENGINE REVOLUTION
COUNTE CNIRQ=
TRUE CNIRQ=
9
10
11
12
(12) 13
(13) 14
(14) 15
(15) 16
(16) 17
(17) 18
(18) 19
TSPST
QASTF

FIG. 14

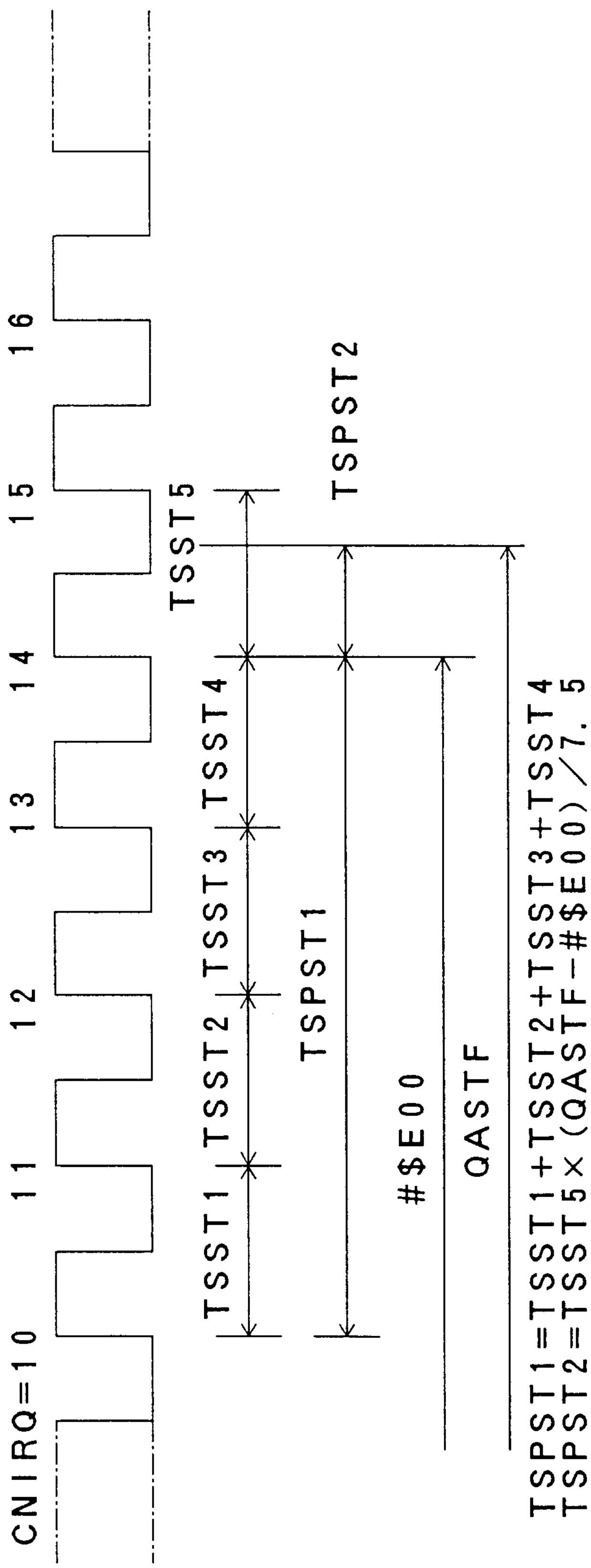
CNIRQ=10
11
12
13
14
15
16
TSST1
TSST2
TSST3
TSST4
TSST5
TSPST1
TSPST2
#$E00
QASTF
TSPST1=TSST1+TSST2+TSST3+TSST4
TSPST2=TSST5×(QASTF−#$E00)/7.5

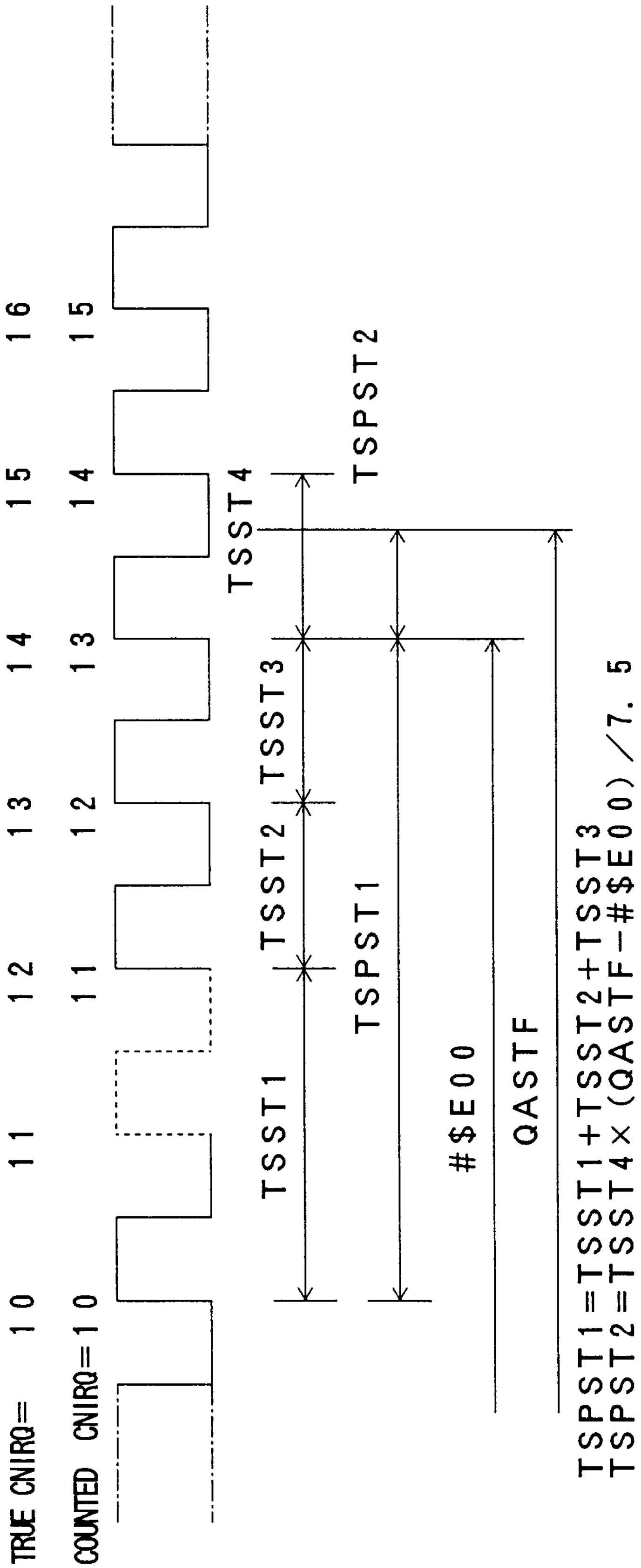
TRUE CNIRQ= 10 11 12 13 14 15 16
COUNTED CNIRQ=10 11 12 13 14 15
TSST1
TSST2
TSST3
TSST4
TSPST1
TSPST2
#$E00
QASTF
TSPST1=TSST1+TSST2+TSST3
TSPST2=TSST4×(QASTF−#$E00)/7.5

FIG. 15

FIG. 16

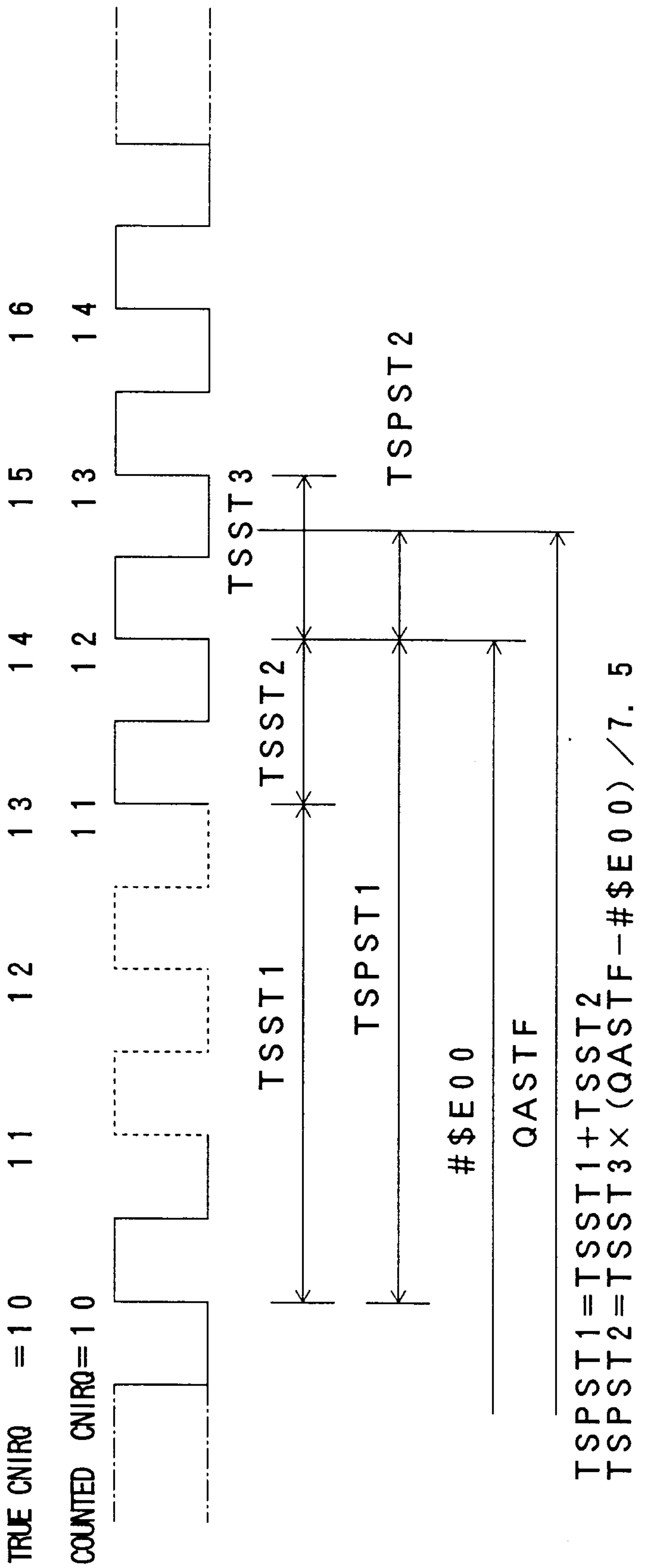
TRUE CNIRQ =10
COUNTED CNIRQ=10
11
12
13
14
15
16
11
12
13
14
TSST1
TSST2
TSST3
TSPST1
TSPST2
#$E00
QASTF
TSPST1=TSST1+TSST2
TSPST2=TSST3×(QASTF−#$E00)/7.5

FIG. 17

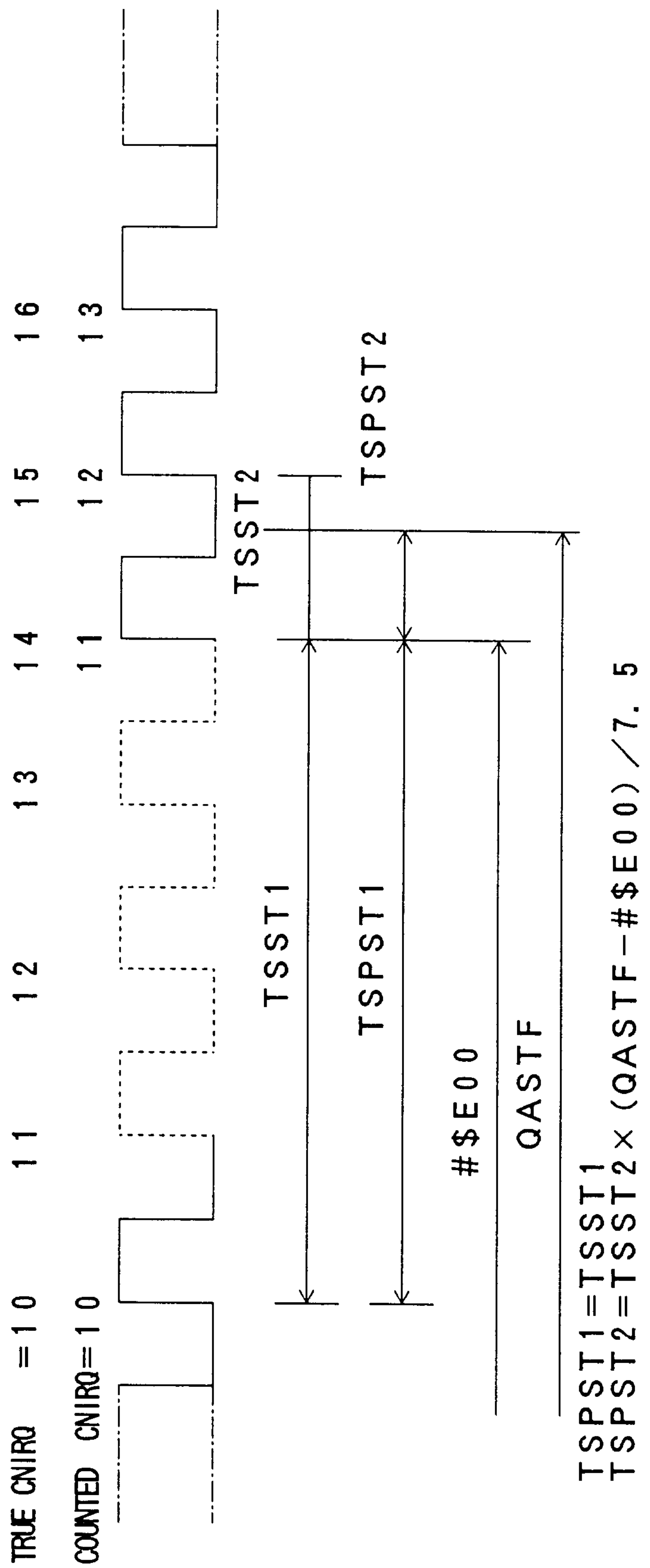
TRUE CNIRQ =10
COUNTED CNIRQ=10
11
12
13
14
15
16
11
12
13
TSST1
TSPST1
TSST2
TSPST2
#$E00
QASTF
TSPST1=TSST1
TSPST2=TSST2×(QASTF−#$E00)/7.5

FIG. 18

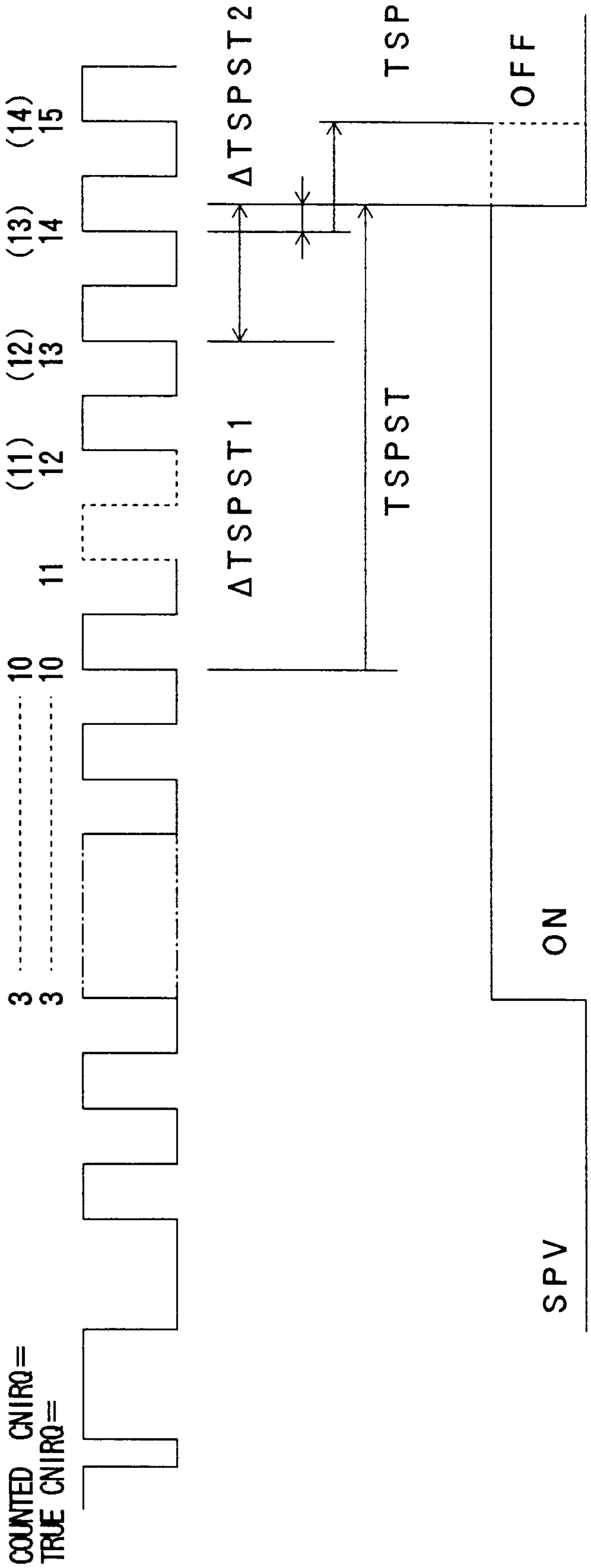
COUNTED CNIRQ=
TRUE CNIRQ=
3
3
10
10
11
(11)
12
(12)
13
(13)
14
(14)
15
ΔTSPST1
ΔTSPST2
TSPST
TSP
OFF
ON
SPV